# EUROPÄISCHE PATENTSCHRIFT

(11) **EP 0 705 853 B1**
(45) Veröffentlichungstag und Bekanntmachung des Hinweises auf die Patenterteilung: **03.02.1999**
(21) Anmeldenummer: 95115526.6
(22) Anmeldetag: 02.10.1995
(51) Int. Cl.: C08F 220/18, C09D 133/06, C09J 133/06

(54) **Copolymerisate mit cyclischen oder polycyclischen Monomeren mit einer speziellen Isomerenverteilung und deren Einsatz in Beschichtungsmittel**
Copolymers made from cyclic or polycyclic monomers having a specific isomer distribution and their use in coating compositions
Copolymères avec des monomères cycliques ou polycycliques avec une répartition spéciale d'isomères et leur usage dans des revêtements

(30) Priorität: 07.10.1994 DE 4435950
(43) Veröffentlichungstag der Anmeldung: 10.04.1996
(73) Patentinhaber: HOECHST AKTIENGESELLSCHAFT, 65926 Frankfurt am Main (DE)
(72) Erfinder: Epple, Ulrich, Dr., D-65205 Wiesbaden (DE); Schmidt, Holger, Dr., D-42115 Wuppertal (DE); Brindöpke, Gerhard, Dr., D-65843 Sulzbach (DE); Dössel, Karl-Friedrich, Dr., D-65187 Wiesbaden (DE)
(74) Vertreter: Zounek, Nikolai, Dipl.-Ing.

(56) Entgegenhaltungen:
- EP-A- 0 171 847
- BE-A- 569 977
- US-A- 4 529 656

## Beschreibung

Die Entwicklung neuer Lacke im Automobil-, Kunststoff-, Holz- und Industriebereich orientiert sich in jüngster Zeit im wesentlichen an zwei Zielen: Verringerung der Lösemittelemission und Vermeidung von Abfällen.

Dementsprechend werden besonders bei der Entwicklung neuer Lacke moderne Beschichtungsmittel wie festkörperreichere ("high solid"), wäßrige Systeme sowie Pulverlacke favorisiert.

Vorreiter dieser Entwicklungsrichtungen sind meist der Automobilbau und deren Reparaturgeschäft. Die heute eingesetzte vierschichtige Automobilserienlackierung besteht aus einer wäßrigen kataphoretischen Tauchlackierung zum Korrosionschutz, einem wäßrigen oder lösemittelhaltigen Füller zum Steinschlagschutz, einem wässrigen Metallic-Basislack zur Farbgebung bzw. für den Metallic-Effekt und einem lösemittelhaltigen - meist festkörperreichen, wäßrigen oder pulverförmigen Klarlack, der der Beschichtung den nötigen Glanz, die Beständigkeit gegen Wasser, Chemikalien und gegen Witterungseinflüsse verleiht.

Gerade die Schichten Füller, Basislack und Klarlack sind derzeit Gegenstand intensiver Forschungsanstrengungen, beispielsweise beschrieben in den Schriften DE-A 43 24 801, DE-A 41 22 265, DE-A 41 22 266, DE-A 43 36 206, DE-A 43 42 384, DE-A 43 26 656, DE-A 44 15 319, DE-A 43 11 128, EP-B 0 056 971, EP-A 0 509 392 und EP-A 0 509 393.

Bei der obersten Schicht, dem Klarlack, konkurrieren alle drei modernen Beschichtungsmittel miteinander, und im Vergleich zeigt jedes dieser Lacksysteme Stärken und Schwächen bei der Applikation und im Einsatz.

Diese letzte Schicht besteht meist aus Acrylatcopolymeren, da diese sehr wetterecht sind. Für "high solid"-Bindemittel sind diese Copolymeren niedermolekular eingestellt, für wäßrige Bindemittel werden sie meist neutralisiert und in Wasser dispergiert oder für Pulverbindemittel in pulverförmiger Form hergestellt. Bei diesen Acrylatharzen handelt es sich um Acrylatcopolymere mit bzw. ohne Styrol, die je nach Vernetzungsreaktion (Härtung jeweils für die Melaminvernetzung, Isocyanatvernetzung (blockiert oder unblockiert), Carboxy-, Epoxyvernetzung usw. oder beliebige Kombinationen) entsprechende funktionelle Gruppen enthalten.

Styrol als aromatisches Vinylmonomer besitzt die Funktion der "Hartmachung" (Erhöhung der Glasübergangstemperatur) sowie der Verbilligung der Produkte. Nachteilig ist jedoch die Verringerung der Wetterechtheit bei zunehmendem Gehalt an Styrol. Die Bestrebungen gehen deshalb dahin, den Gehalt an Styrol zu beschränken und andere "harte und wetterbeständige" Monomere einzusetzen, die zu einer möglichst hohen Glasübergangstemperatur des Harzes beitragen. Wünschenswert sind also Produkte mit entsprechenden Monomeren, die möglichst wenig freies Volumen besitzen.

Als geeignete Monomere bieten sich spezielle aliphatische Acrylester an, die sterisch gehindert sind, d.h. die entweder eine verzweigte oder eine (poly)cyclische Struktur in der Seitenkette aufweisen. Diese Monomeren machen "hart", da ihre Homopolymerisate Glasübergangstemperaturen von über 45 °C aufweisen, gemessen bei einer ausreichend hohen Molmasse des Homopolymeren, bei der keine Abhängigkeit der Temperatur der Glasübergangsstufe von der Molmasse mehr besteht.

Ein Acrylmonomer mit besonders hoher Glasübergangstemperatur ist das Isobornylacrylat bzw. -methacrylat. Seine Herstellung kann klassisch über zwei Stufen durch Umesterung von Methylmethacrylat oder Methylacrylat mit Isoborneol bzw. durch Veresterung des Alkohols mit Methacrylsäure/Acrylsäure oder deren Chlorderivaten erfolgen. Der erste Schritt ist dabei die Herstellung des Isoborneols durch die Reaktion von Wasser mit Camphen unter saurer Katalyse.

Neuere Methoden zur Herstellung dieser Monomeren in einem Schritt gehen vom Urrohstoff Camphen und der Methacryl- oder Acrylsäure direkt aus, die an einem sauren Ionenaustauscher, der gleichmäßig den Reaktor schwebend erfüllt, zur Reaktion gebracht werden (DE-A 44 19 686).

Diese Methode führt durch Einstellung der Reaktionsparameter zu verstärkten Umlagerungsreaktionen am Camphengerüst (Wagner-Meerwein-Umlagerungen), die größere Mengen an Strukturisomeren des Isobornyl(meth)acrylates wie Pseudobornyl(meth)acrylat und Isofenchyl(meth)acrylat erzeugen können. Die Massenanteile der einzelnen Strukturisomeren Acrylate bzw. Methacrylate sind nach dem neuen 1-stufigen Verfahren:

| (Meth)Acrylat | Verfahren | |
|---|---|---|
| | 1-Stufen (neu) | 2-Stufen |
| Isobornyl- | 50 - 92 % | 92 - 99,9 % |
| Isofenchyl- | ≥ 3,5 % | < 3,5 % |
| Pseudobornyl- | ≥ 1 % | < 1 % |

Üblicherweise zeigen Polymere von Monomeren mit Isomerengemischen niedrigere Glasübergangstemperaturen als die jeweiligen Polymeren aus isomerenreineren Monomeren.

Überraschend wurde jedoch gefunden, daß durch den Einsatz solcher Monomeren mit einer "breiteren" Isomerenverteilung Acrylpolymere mit verringertem freien Volumen hergestellt werden können, die eine um bis zu 15 °C höhere Glasübergangstemperatur aufweisen bei vergleichbaren Molmassen und Molmassenverteilungen. Diese neuen Acrylpolymere müssen daher kein oder nur einen reduzierten Gehalt an Styrol zur Anhebung der Glastemperatur enthalten und sind daher witterungsbeständiger.

Als breite "Isomerenverteilung" bezeichnen wir eine Mischung, die neben der Hauptkomponente einen Massenateil von 8 bis 50 % mindestens eines Isomeren enthält.

Dies führt bei den 1-Komponenten-Lacken, ob konventionell oder wäßrig, zu noch höheren Pendelhärten ("Filmhärten") bei hoher Wetterbeständigkeit. Auch bei pulverförmigen Lacken zeigen sich die genannten Vorteile, wobei die Rieselfähigkeit auch bei höheren Temperaturen ("Blockbeständigkeit") mit solchen Acrylatharzen besser gewährleistet werden kann.

Die Erfindung betrifft ebenfals Copolymere von olefinisch ungesättigten Monomeren, in denen mindestens ein Monomer eine Isomerenmischung von cyclischen oder polycyclischen olefinisch ungesättigten Monomeren ist, wobei diese Mischung Massenanteile von 8 bis 25 % mindestens eines Isomeren der Hauptverbindung enthält.

Solche cyclischen Strukturen schließen diejenigen ein, die von mono- und polycylischen Terpenen abgeleitet sind, wie Menthan, Terpinen, Phellandren, Limonen, Caran, Pinan und Camphan. Diese cyclischen Verbindungen können olefinische Doppelbindungen innerhalb des Ringgerüstes enthalten, oder sie können exocyclische Doppelbindungen in Alken-Substituenten mit 2 bis 10 Kohlenstoff-Atomen aufweisen.

Gegenstand der vorliegenden Erfindung sind weiterhin Beschichtungsmittel für die Autoreparatur, insbesondere für Reparaturfüller und Autoreparaturdecklack.

Entsprechende erfindungsgemäße Copolymerisate eignen sich daher besonders gut für lacktechnische Anwendungen in 2-Komponenten-Systemen, insbesondere in "high solid" Systemen. Die höheren Glasstufen der Acrylatharze bei den "high solid" Systemen führen zu einer schnelleren Klebfreiheit bei Raum- sowie moderaten Härtungstemperaturen. Die Möglichkeit der Bereitstellung von "very high solid" Lack-Systemen mit dieser Isomerenverteilung an Isobornyl(meth)acrylat ist hierdurch gegeben, da die Bindemittel bei gleicher Glasübergangstemperatur noch niedermolekularer eingestellt werden können.

Es ist bekannt, daß solche Bindemittel durch Polymerisation in Substanz hergestellt werden können. Dabei wird eine Komponente wie beispielweise ein Glycidylester oder ein Maleinat zu Beginn einer Polymerisation vorgelegt. Dieser Ester bzw. dieses Monomer wird im weiteren Verlauf bei Zugabe von (im Fall des Maleinats weiteren) Monomeren während der Polymerisation vollständig in das Copolymerisat eingebaut (DE-A 43 26 656, DE-A 44 15 319, DE-A 43 11 128, EP-B 0 056 971, EP-A 0 509 392, EP-A 0 509 393).

Da die erfindungsgemäßen Copolymerisate durch die Strukturisomerenverteilung von Isobornyl(meth)acrylat charakterisiert sind, nicht aber durch ihr Herstellungsverfahren, kann auch die Lösemittel- oder die Massepolymerisation zur Herstellung der erfindungsgemäßen Bindemittel eingesetzt werden.

Die Erfindung betrifft daher alle Copolymere, die Isobornyl(meth)acrylat und deren Strukturisomeren in einer "breiteren Verteilung" enthalten, unabhängig vom Herstellverfahren, der Applikationsform und dem Einsatzzweck. Der Massenanteil an Isobornylester von α,β-ungesättigten Säuren in der Isomerenmischung ist 50 bis 92 %, bevorzugt 50 bis 90 %, und besonders bevorzugt 50 bis 88 %. Die Massenanteile an Isofenchylestern sind entsprechend 3,5 bis 49 %, bevorzugt 4 bis 48,5 %, und besonders bevorzugt 4,5 bis 48 %; die Massenanteile an Pseudobornylestern sind von 1 bis 46,5 %, bevorzugt 1,5 bis 46 %, und besonders bevorzugt 2 bis 45,5 %.

Der Begriff Copolymere soll auch sämtliche Polymere mit einschließen, die Polykondensatprodukte oder Polyadditionsprodukte enthalten.

Unter diesem Begriff werden auch Polyurethan-Vinyl-Hybrid-Dispersionen verstanden, wie sie in den Patentschriften DE-A 41 22 265, DE-A 41 22 266, DE-A 43 362 06 und DE-A 43 42 384 beschrieben sind.

Alle nachfolgenden Angaben von Teilen, Anteilen und Gehalten auch in Prozent bedeuten Massenanteile und -gehalte, sofern nicht anders gekennzeichnet.

Die Erfindung betrifft insbesondere Acrylat-Copolymerisate mit einer OH-Zahl von 40 bis 250 mg KOH/g, einer Säurezahl von größer 1 mg KOH/g und einer Lösungsviskosität von 10 bis 2000 mPa·s (gemessen an einer 50 %igen Lösung bei 23 °C gemäß DIN 53018).

Diese OH-Gruppen enthaltenden Copolymerisate 1 können durch die radikalische Polymerisation von Massenanteilen von
1A) 3 bis 50 %, vorzugsweise 5 bis 45 %, besonders bevorzugt 7 bis 40 %, Glycidylestern aliphatischer gesättigter Monocarbonsäuren mit einem tertiären oder quarternären α-C-Atom und
1B) 97 bis 50 %, vorzugsweise 95 bis 55 %, besonders bevorzugt 93 bis 60 % von mindestens zwei olefinisch ungesättigten copolymerisierbaren Monomeren, von denen mindestens eines mindestens eine COOH-Gruppe äquimolar oder im molaren Überschuß zu 1A) enthält und mindestens eines ein Isomerengemisch eines cyclischen Monomeren ist,
erhalten werden.

Dabei reagieren die Carboxylgruppen-tragenden Moleküle (Monomere oder Polymere) mit den Glycidylestern unter Ringöffnung der Oxirangruppe und Esterbildung. Diese "Carboxy-Epoxy"-Reaktion kann unkatalysiert oder katalysiert ablaufen. Als Katalysatoren lassen sich (Erd-)Alkalimetallverbindungen und Übergangsmetallverbindungen einsetzen, z.B. Salze von Na, Li, K, Ca, Zr, V, Ti, Sn oder Zn.

Unter cyclischen Monomeren verstehen wir Monomeren mit cyclischer oder polycyclischer Struktur, die Substituenten aller Art besitzen können.

Die resultierenden hydroxylgruppenhaltigen Copolymeren weisen z.T. hohe Säurezahlen auf und besitzen dennoch geringe Lösungsviskositäten.

Diese Acrylpolymere führen in einer fertigen Lackformulierung zu festkörperreichen 1- Komponenten- oder 2-Komponenten-Beschichtungsmitteln.

Zur Herstellung von wasserverdünnbaren Polyacrylaten werden die durch dieses Verfahren hergestellten Acrylatcopolymere mit geringen oder normalen Lösungsviskositäten in einem wasserverdünnbaren organischen Hilfslösemittel angelöst, partiell oder vollständig neutralisiert und normal oder invers mit Wasser verdünnt.

Aus den so erhaltenen wasserverdünnten Polyacrylatharzen werden durch geeignete Härtungskomponenten und Additive wasserverdünnbare Lacke hergestellt, die eingebrannt (1 K) oder als 2-Komponenten-Lack formuliert werden.

Als Komponente 1A werden bevorzugt Glycidylester von α-Alkylalkanmonocarbonsäuren und/oder α,α-Dialkylalkanmonocarbonsäuren einzeln oder im Gemisch verwendet.

Die Verbindungen gemäß 1A sind beispielsweise ausgewählt aus den Glycidylestern der 2,2-Dimethylpropionsäure, der 2,2-Dimethylundecansäure und der Neosäuren wie Neohexansäure, Neononansäure und Neodecansäure. Die Alkylreste können hierbei auch eine unterschiedliche Anzahl an C-Atomen besitzen.

Im allgemeinen liegt die Gesamtzahl an C-Atomen der Ausgangsmonocarbonsäuren für den Glycidylester zwischen 4 und 30, insbesondere zwischen 5 und 20.

Die Komponente 1B besteht aus einem Gemisch von
1B1) einem oder mehreren olefinisch ungesättigten Monomeren mit mindestens einer -COOH-Gruppe, und
1B2) einem oder mehreren olefinisch ungesättigten Monomeren mit mono- oder polycyclischer Struktur, die einen hohen Anteil an Strukturisomeren besitzen,
sowie gegebenenfalls einer oder mehreren der Komponenten 1B3 bis 1B5, nämlich
1B3) einem oder mehreren Hydroxyalkylestern von α,β-ungesättigten Carbonsäuren,
1B4) einem oder mehreren Estern einer α,β-ungesättigten Carbonsäure mit einem einwertigen aliphatischen Alkohol mit 1 bis 20 C-Atomen und
1B5) einer oder mehreren olefinisch ungesättigten Verbindungen, die nicht unter 1B1, 1B2, 1B3 oder 1B4 fallen.

Die Verbindungen gemäß 1B1 sind beispielsweise ausgewählt aus den sauren Acrylmonomeren wie Acryl- und Methacrylsäure, Malein-, Fumar- und Itaconsäure sowie deren Halbestern, und Crotonsäure, Isocrotonsäure und Vinylessigsäure.

Auch in den oben genannten Komponenten 1B2 bis 1B5 schließt der Begriff "α,β-ungesättigte Carbonsäuren" auch die Dicarbonsäuren wie beispielsweise Maleinsäure, Fumarsäure und Itaconsäure sowie deren Halbester ein.

Die Verbindungen gemäß 1 B2 sind Monomere mit mindestens einer C-C-Doppelbindung und einer cyclischen Struktur, die einen hohen Anteil an Strukturisomeren enthalten. Unter cyclischer Struktur verstehen wir im folgenden alle mono- und polycyclischen Strukturen. Bevorzugt werden Ester von α,β-ungesättigten Carbonsäuren mit einer Isomerenmischung von Isoborneol, die Massenanteile von 50 bis 90 %, und besonders bevorzugt 50 bis 88 % Isoborneol enthält. Die Massenanteile an Isofenchylalkohol sind 3,5 bis 49 %, bevorzugt 4 bis 48,5 %, und besonders bevorzugt 4,5 bis 48 %; die entsprechenden Massenanteile von Pseudobornylalkohol sind 1 bis 46,5 %, 1,5 bis 46 % und 2 bis 45,5 %. Bevorzugt eingesetzte Verbindungen sind das Isobornylmethacrylat oder -acrylat mit Strukturisomeren wie Pseudobornylmethacrylat und Isofenchylmethacrylat oder-acrylat.

Die Hydroxyalkylester gemäß 1 B3 sind Mono- bzw. Halbester von α,β-ungesättigten Monocarbonsäuren mit aliphatischen Polyolen bzw. Diolen mit 2 bis 30, insbesondere 2 bis 20 C-Atomen. Halbester mit einer primären Hydroxylgruppe sind beispielsweise Hydroxyäthylacrylat, Hydroxypropylacrylat, Hydroxybutylacrylat, Hydroxyamylacrylat, Neopentylglykolmonoacrylat, Hydroxyhexylacrylat, Hydroxyoctylacrylat und die entsprechenden Methacrylate. Als Beispiele für verwendbare Hydroxyalkylester mit einer sekundären Hydroxygruppe seien 2-Hydroxypropylacrylat, 2-Hydroxybutylacrylat, 3-Hydroxybutylacrylat und die entsprechenden Methacrylate genannt. Selbstverständlich können jeweils auch die entsprechenden Ester anderer α,β-ungesättigter Carbonsäuren wie z.B. der Crotonsäure, der Isocrotonsäure und der Vinylessigsäure eingesetzt werden. Gleichfalls geeignet sind auch Umsetzungsprodukte aus einem Mol Hydroxyäthylacrylat und/oder Hydroxyäthylmethacrylat und durchschnittlich zwei Mol ε-Caprolacton. Andere geeignete hydroxylgruppenhaltige Ester leiten sich ab von den α,β-ungesättigten Carbonsäuren und den oligomeren Alkylenglykolen wie Oligo-äthylen- und -propylenglykol mit Molmassen bis zu 1000 g/mol. Weitere geeignete Verbindungen sind Halbester von α,β-ungesättigten Monocarbonsäuren mit cycloaliphatischen Diolen wie 1,4-Cyclohexandimethanol, 3(4),8(9)-Bis-(hydroxymethyl)-tricyclo[5.2.1.0^{2.6}]decan oder Dihydroxyaromaten wie Brenzkatechin, Hydrochinon und Bisphenol A. Ebenfalls geeignet sind Monoester von aliphatischen und aromatischen Polyolen wie Glycerin-mono(meth)acrylat oder Mono(meth)acrylate von Sorbit, Pentaerythrit oder Glykosiden.

Die Verbindungen gemäß 1B4 sind beispielsweise ausgewählt aus Estern α,β-ungesättigter Monocarbonsäuren mit aliphatischen einwertigen verzweigten und unverzweigten Alkoholen mit 1 bis 20 C-Atomen wie Methyl-, Äthyl-, n-Butyl-, iso-Butyl-, tert.-Butyl-, 2-Äthyl-hexyl-, Hexyl-, Lauryl- und Stearyl- sowie Isopropyl- und 2-Amylacrylat oder -methacrylat. Geeignet sind auch Ester dieser Alkohole mit z. B. Crotonsäure, Isocrotonsäure oder Vinylessigsäure. Besonders bevorzugt sind Methyl- und n-Butylacrylat sowie die entsprechenden Methacrylate.

Die Verbindungen gemäß 1B5 sind beispielsweise ausgewählt aus der Gruppe der Ester der Acryl- und Methacrylsäure mit halogenierten Alkoholen wie z.B. Trifluoräthyl-, Pentafluor-n-propyl- und Hexachlorbicycloheptenyl-acrylat, der Ester halogenierter Acrylsäuren wie Methyl-2-fluoracrylat oder Dibromphenyl-2-fluoracrylat, der Vinylester wie Vinylacetat oder Versaticsäurevinylester, der halogenierten Vinylverbindungen wie Vinylchlorid, Vinylidenchlorid und Vinylidenfluorid und der halogenierten vinylaromatischen Verbindungen wie Chlorstyrol. Sämtliche Verbindungen, die unter B1 bis B4 genannt sind und zusätzlich halogensubstituiert sind, fallen ebenfalls in diese Gruppe.

Die Verbindungen gemäß 1B5 sind auch Glycidylester der Acryl- oder Methacrylsäure, vorzugsweise Glycidylacrylat und Glycidylmethacrylat sowie Malein- oder Fumarsäurediglycidylester.

Verbindungen gemäß 1B5 sind auch Monomere, die Silangruppen enthalten. Typische Beispiele dieser Monomeren sind Acrylatoalkoxysilane, wie γ-(Meth)Acryloxypropyltrimethoxysilan, γ-(Meth)Acryloxypropyltris(2-methoxyäthoxy)silan und Vinylalkoxysilane, wie Vinyltrimethoxysilan, Vinyltriäthoxysilan und Vinyltris(2-methoxyäthoxy)silan. Hierunter fallen auch entsprechende Acyloxysilane.

Als weitere exemplarische Verbindungen von 1B5 sind auch Acrylamide, Acrylnitril und Methacrylnitril zu nennen.

Styrol als preiswertes Standardmonomer ist mit ein Bestandteil der Komponenten 1B5, wird aber beschränkt oder überhaupt nicht eingesetzt.

Im Ausgangsmonomergemisch besteht die Komponente 1B bevorzugt aus einem Gemisch von Massenanteilen von
1B1) 1 bis 50, vorzugsweise 3 bis 45, besonders bevorzugt 5 bis 40 % einer α,β-ungesättigten Monocarbonsäure oder Dicarbonsäure, vorzugsweise Acryl- oder Methacrylsäure, Malein-, Fumar- oder Itaconsäure sowie deren Halbestern, oder deren Mischungen,
1B2) 1 bis 85, vorzugsweise 2 bis 8, besonders bevorzugt 3 bis 75 % eines olefinisch ungesättigten Monomeren mit cyclischer Struktur und hohem Anteil an Strukturisomeren oder deren Mischungen von mehreren solcher Monomeren,
1B3) 0 bis 45, vorzugsweise 10 bis 45 % eines Hydroxyalkylesters oder oligomeren Hydroxyalkylenglykolesters der Acrylsäure oder Methacrylsäure oder Mischungen mehrerer solcher Ester,
1B4) 0 bis 60, vorzugsweise 0 bis 55 % eines Esters der Acryl- oder Methacrylsäure mit einem einwertigen aliphatischen Alkohol oder Mischungen mehrerer solcher Ester,
1B5) 0 bis 85, vorzugsweise 0 bis 80 % mindestens einer olefinisch ungesättigten Verbindung, wie oben beschrieben,
wobei die Summe stets 100 % der Gesamtmasse der Komponenten 1B beträgt, und die Summe der Massenanteile der Ester bevorzugt nicht mehr als 90 % beträgt.

Besonders geeignete Monomere sind
1B1) Acrylsäure, Methacrylsäure, Maleinsäure und Fumarsäure,
1B2) Isobornylacrylat oder-methacrylat mit hohen Gehalten an Pseudobornyl- oder Isofenchylacrylat oder-methacrylat,
1B3) Hydroxyäthyl-, Hydroxypropyl- und Hydroxybutylester der Acryl- und der Methacrylsäure, oligomere Propylenglykolester der Acryl- und der Methacrylsäure,
1B4) Methyl-, Äthyl-, Butyl-, Pentyl-, Hexyl-, Lauryl- und Stearylester der Acryl- und Methacrylsäure,
1B5) fluorierte und chlorierte Acrylester, vinylaromatischen Verbindungen wie Styrol, fluorierte und chlorierte vinylaromatische Verbindungen und Monomere, die Silangruppen enthalten.

Außerdem betrifft die Erfindung auch Acrylat-Copolymerisate mit einer Epoxid-Zahl von 0,1 bis 20, einer Glasübergangstemperatur von über 30 °C und einer Schmelzeviskosität von 500 bis 50000 mPa·s gemessen bei 170 °C.

Diese epoxidgruppenhaltigen Copolymerisate 2 können gleichfalls durch radikalische Polymerisation von Massenanteilen von
2A) 0 bis 60 %, bevorzugt 1 bis 55 %, mindestens eines Diesters einer α,β-olefinisch ungesättigten Dicarbonsäure mit 1 bis 20 C-Atomen in der Estergruppe,
2B) 100 bis 40 %, bevorzugt 99 bis 45 %, von mindestens drei olefinisch ungesättigten copolymerisierbaren Monomeren, von denen mindestens eine eine vinylaromatische Verbindung ist und mindestens eine entweder die Glycidylester-Gruppe direkt trägt oder diese im Verlauf der Reaktion gebildet wird und mindestens eines ein Isomerengemisch eines cyclischen Monomeren ist,
erhalten werden.

Die resultierenden epoxidgruppenhaltigen Copolymere weisen meist hohe Glasübergangstemperaturen auf.

Diese Acrylpolymere führen in einer fertigen Lackformulierung mit entsprechenden Dicarbonsäuren oder deren Anhydrid bzw. Dicarbonsäurepolyanhydriden als Härter und Additiven zu blockbeständigen Pulverlacken, die sehr wetterbeständig sind.

Als Komponenten 2A werden bevorzugt Diester einer α,β-olefinisch ungesättigten Dicarbonsäure mit 1 bis 10 C-Atomen in der Estergruppe einzeln oder im Gemisch verwendet.

Die Verbindungen gemäß 2A sind beispielsweise Dimethylmaleinat, Diäthylmaleinat, Dibutylmaleinat, Diisopropylmaleinat oder die entsprechenden Fumarate.

Die Komponente 2B besteht aus einem Gemisch von
2B1) einem beschränkten Anteil an vinylaromatischen Verbindungen,
2B2) Verbindungen gemäß 1B2),
2B3) einem oder mehreren Estern einer α,β-ungesättigten Carbonsäure mit Glycidylgruppen wie Malein- oder Fumarsäurediglycidylester oder Glycidylacrylat oder -methacrylat
sowie gegebenenfalls
2B4) Verbindungen gemäß Typ 1A, 1B1, 1B3, 1B4 oder 1B5 oder deren Gemischen.

Im Ausgangsmonomerengemisch besteht die Komponente 2B bevorzugt aus einem Gemisch von
2B1) 1 bis 85, vorzugsweise 5 bis 65 % einer vinylaromatischen Verbindung oder Mischungen mehrerer vinylaromatischer Verbindungen,
2B2) 1 bis 85, vorzugsweise 2 bis 50 % eines olefinisch ungesättigten Monomeren mit cyclischer Struktur und hohem Anteil von Strukturisomeren oder deren Mischungen von mehreren solcher Monomeren,
2B3) 1 bis 60, vorzugsweise 3 bis 45 % eines Esters einer α,β-ungesättigten Carbonsäure mit glycidylgruppenhaltigen Alkoholen
sowie 0 bis 90, vorzugsweise 0 bis 70 % einer oder mehrerer der Komponenten 2B4.

Besonders geeignete Monomere sind
2B1) Styrol, α-Methylstyrol und Vinyltoluole,
2B2) Isobornylacrylat oder -methacrylat mit jeweils hohen Gehalten Pseudobornyl- und/oder Isofenchylacrylat oder -methacrylat,
2B3) Glycidylacrylat oder -methacrylat und Malein- oder Fumarsäurediglycidylester,
2B4) Hydroxyäthyl-, Hydroxypropyl- und Hydroxybutylacrylat oder -methacrylat, Methyl-, Äthyl- oder n- bzw. tert.-Butylacrylat oder -methacrylat, 2-Äthylhexylacrylat oder -methacrylat und γ-(Meth)Acryloxypropyltrimethoxysilan.

Das vorgestellte Substanzpolymerisationsverfahren, entweder mit Vorlage von Glycidylester oder Maleinat zu Beginn kann auch bei Vorlage beider Komponenten durchgeführt werden oder nur einer Komponente und anschließender Zugabe z.B. von Glycidylestern (mehrstufig).

Eine bevorzugte Verfahrensweise ist die Herstellung des Polymeren (2) durch Copolymerisation von mindestens 3 olefinisch ungesättigten Monomeren aus der Gruppe (2B), wobei jeweils mindestens ein Mitglied der Gruppen (2B1), (2B2) und (2B3) in der Reaktionsmischung zugegen ist.

Gegebenenfalls kann auch eine Verbindung der Gruppe (2B4) anwesend sein. Gegebenenfalls kann auch eine Verbindung der Gruppe (2A) zugegen sein. In einer besonders bevorzugten Ausführungsform kann ein Ester eines Epoxygruppen-haltigen Alkohols und einer gesättigten aliphatischen Carbonsäure mit einem tertiären oder quartären α-Kohlenstoff-Atom vor, während oder nach der Polymerisation zugesetzt werden. Die Carbonsäure hat bevorzugt 5 bis 15, besonders bevorzugt 5 bis 11 Kohlenstoff-Atome.

Je nach der Natur der beteiligten Monomeren können entsprechende Verfahrensvarianten gewählt werden.

Für die erfindungsgemäßen Copolymerisate kommen die üblichen radikalbildenden Verbindungen als Polymerisationsinitiatoren einzeln oder im Gemisch in Frage. Solche sind z.B. aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid oder Di-t-amylperoxid und Alkylperester, wie t-Butylperoxy-2-äthylhexanoat oder t-Amylperoxy-2-äthylhexanoat. Der Anteil der Initiatoren kann z.B. 0,5 bis 5, vorzugsweise bis 4, insbesondere bis 3 %, bezogen auf die Gesamtmasse der Ausgangskomponenten, betragen.

Die Polymerisation wird vorzugsweise in Substanz (am Polymerisationsende als "Massepolymerisation") vorgenommen. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem geringen Lösemittelanteil möglich, nämlich bis zu 20, vorzugsweise bis zu 10 und insbesondere bis zu 5 %, bezogen auf die Masse der Ausgangskomponenten. Dabei kann auch unter erhöhtem Druck polymerisiert werden. Jedoch ist das Arbeiten ohne Lösemittel vorzuziehen.

Die hergestellten Hydroxyl-, Carboxyl- und/oder Epoxidgruppen-haltigen Copolymerisate können in einer weiteren Stufe noch modifiziert werden, z.B. durch Umsetzen mit Isocyanat-Verbindungen. Dann muß das bei der Polymerisation, also der Herstellung der Polymeren, eingesetzte Lösemittel selbstverständlich gegenüber diesen Isocyanat-Verbindungen inert sein.

Diese Isocyanat-Verbindungen schließen beispielsweise auch alle niedermolekularen Harnstoffderivate ein, die in der Lackindustrie zu "sag controlled"-Acrylatharzen führen. Hierzu wird z.B. das Copolymerisat mit Monoamin oder Polyaminen vorgelegt und entsprechende (ein- oder mehrfunktionelle) Isocyanate zugegeben.

Die erfindungsgemäßen Verfahren können diskontinuierlich (sogenanntes "batch"-Verfahren) oder kontinuierlich durchgeführt werden. Bei den mehrstufigen Verfahren ist auch eine Ausführungsform möglich, in der die jeweiligen Umsetzungsstufen in separaten Behältern durchgeführt werden. Ebenfalls ist es möglich, die Umsetzung der ersten Stufe kontinuierlich und die der zweiten Stufe diskontinuierlich durchzuführen.

Die erfindungsgemäßen Copolymerisate 1 zeichnen sich aus durch ihren Gehalt an OH-Gruppen, die im allgemeinen zu einer OH-Zahl von 40 bis 250, bevorzugt von 60 bis 200 und insbesondere von 70 bis 170 mg KOH/g führen, sowie durch ihren Gehalt an Säuregruppen, die im allgemeinen zu einer Säurezahl größer als 1, bevorzugt von 3 bis 70 und insbesondere von 5 bis 50 mg KOH/g führen.

Für die konventionellen "high solid"-Lacke besitzen die erfindungsgemäßen eingesetzten Polymerisate eine besonders niedrige Lösungsviskosität. Im allgemeinen liegt sie im Bereich von 10 bis 2000, vorzugsweise 15 bis 500 und insbesondere 20 bis 150 mPa s, gemessen an einer 50 %igen Lösung in Butylacetat bei 23 °C nach DIN 53018. Die Polymerisate besitzen typischerweise mittlere Molmassen (Zahlenmittel) von unter 5000, bevorzugt von 300 bis 4500 und insbesondere von 500 bis 4000 g/mol.

Geeignete Lösemittel für die erfindungsgemäß erhaltenen Produkte sind z.B. aliphatische, cycloaliphatische und/oder aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat; Äther, wie Äthylenglykolacetatmonoäthyl-, methyl- oder butyläther; Glykole; Alkohole; Ketone wie Methylamylketon, Methylisobutylketon; Lactone oder dergleichen oder Gemische derartiger Lösemittel.

Für wäßrige Lack-Systeme werden die Polymerisate niederviskos oder höherviskos hergestellt und in einem wasserverdünnbaren organischen Hilfslösemittel a) angelöst, partiell oder vollständig mit einer Base b) neutralisiert und normal oder invers mit Wasser verdünnt und so in eine wasserverdünnbare Form überführt.

Geeignete Komponenten a) sind unter anderem wasserverdünnbare ein- oder mehrwertige Alkohole oder Glykole, zum Beispiel Äthanol, n-Propanol, Isopropanol, n-Butanol, Isobutanol, Äthylenglykol, Diäthylenglykol, Triäthylenglykol, Propylenglykol und Glycerin, wasserverdünnbare Monoäther von mehrwertigen Alkoholen, zum Beispiel Methoxypropanol oder Methoxybutanol, sowie wasserverdünnbare Glykoläther wie zum Beispiel Butylglykol oder Butyldiglykol.

Als Komponenten b) zur Neutralisation der Säuregruppen können sowohl organische Basen als auch anorganische Basen verwendet werden. Vorzugsweise werden primäre, sekundäre und tertiäre Amine, zum Beispiel Äthylamin, Propylamin, Dimethylamin, Triäthylamin, Dibutylamin, Dimethylisopropylamin, Cyclohexylamin, Benzylamin, Morpholin und Piperidin eingesetzt, besonders bevorzugt sind Aminoalkohole, zum Beispiel N,N-Diäthylaminoäthanol, N,N-Dimethylaminoäthanol, Äthanolamin, Diäthanolamin, Triäthanolamin, 2-Amino-2-methylpropanol oder 2-Dimethylamino-2-methyl-1-propanol.

Die Neutralisation wird so durchgeführt, daß nach dem Verdünnen mit Wasser stabile Lösungen oder Dispersionen mit einem pH-Wert zwischen 6 und 9, vorzugsweise 7 bis 8, resultieren.

Die erfindungsgemäßen Copolymerisate 2 zeichnen sich aus durch ihren Gehalt an Epoxidgruppen, die im allgemeinen zu einer Epoxid-Zahl von 0,1 bis 20, bevorzugt von 0,3 bis 10 und insbesondere von 0,5 bis 7 g Epoxidsauerstoff/100 g führen, sowie durch ihre Schmelzeviskosität von 500 bis 50000, bevorzugt von 1000 bis 35000 und insbesondere von 2000 bis 25000 mPa·s, gemessen bei 170°C.

Die Copolymerisate 2 werden nach der Polymerisation abgekühlt, wobei sie zu einer festen Masse erstarren, die zerkleinert werden kann. Solche glycidylgruppenhaltigen Produkte werden in Verbindung mit carboxylgruppenhaltigen Härtern zur Herstellung von Pulverlacken verwendet. Als Härter können insbesondere zweibasige Säuren, deren Anhydride sowie Polyanhydride einzeln oder im Gemisch verwendet werden. Die Polyanhydride können auch im Gemisch mit Hydroxycarbonsäuren eingesetzt werden.

Nach einer weiteren Ausführungsform der Erfindung kann ein erfindungsgemäß hergestelltes Copolymerisat 1 oder 2, das noch freie COOH-Gruppen enthält, mit Triglycidysocyanurat gehärtet werden.

Gegenstand der vorliegenden Erfindung sind weiterhin Beschichtungsmittel, die die erfindungsgemäßen Copolymerisate als Bindemittel enthalten. Als Beispiele sollen hier "high solid"-1-Komponenten-Lacke, "high solid"-2-Komponenten- Lacke, wäßrige 1-Komponenten-Lacke, wäßrige 2-Komponenten-Lacke und Pulverbeschichtungsmittel dienen.

Weiterhin gut geeignet sind die erfindungsgemäßen Copolymerisate für pigmentierte Decklacke und für Füller, in Beschichtungsmitteln für Holz, Papier, Karton, Kunststoffe, Textilien, Metall und Baustoffe, in Beschichtungsmitteln, die zwischen Raumtemperatur und 90 °C bzw. 180 °C getrocknet werden, in Klebstoffen sowie in Dichtungsmassen.

Als Härterkomponente für 1-Komponenten-Lacke eignen sich in diesen "high solid" und wäßrigen Beschichtungsmitteln Umsetzungsprodukte von Formaldehyd mit Aminoplastbildnern wie Harnstoff, Alkylenharnstoffen, Melamin und Guanaminen oder deren Äther mit niedrigen Alkoholen wie Methanol oder Butanol, weiter Polyisocyanate sowie Anhydridgruppen enthaltende Verbindungen einzeln oder in Kombination. Der Vernetzer wird jeweils in solch einer Menge zugesetzt, daß das Molverhältnis der OH-Gruppen des Copolymerisats zu den reaktiven Gruppen des Vernetzers zwischen 0,3 : 1 und 3 : 1 liegt

Als Härterkomponente geeignete Formaldehyd-Addukte sind bevorzugt solche, die von Harnstoff, Melamin und Benzoguanamin abgeleitet sind sowie die vollständig oder teilweise verätherten Formaldehyd-Amin-Addukte. Besonders bevorzugt werden teilweise oder vollständig mit aliphatischen Alkoholen mit 1 bis 4 C-Atomen verätherte Melamin-Formaldehyd-Addukte als Härtungsmittel eingesetzt. Beispiele für solche kommerziell erhältlichen Härter sind ®Maprenal MF 900, VMF 3921 W und VMF 3926 (Cassella AG) sowie ®Cymel 303 und 327 (Cytec). Geeignete Mischungsverhältnisse liegen im Bereich von 50 bis 90 Teilen

Copolymerisat zu 50 bis 10 Teilen Amin-Formaldehyd-Addukt, bezogen auf Festharz.

Auch geeignete Formaldehyd-Phenol-Addukte und deren Derivate können als Härter eingesetzt werden.

Diese Vernetzer führen in Gegenwart von Säuren, z.B. p-Toluolsulfonsäure zur Aushärtung der Beschichtung. Die Heißhärtung kann in üblicher Weise bei Temperaturen von 80 bis 200 °C, z.B. in 10 bis 30 Minuten vorgenommen werden.

Für die Härtung der erfindungsgemäßen "high solid" Produkte im 2-Komponenten-Lack, besonders bei moderaten Temperaturen bzw. bei Raumtemperatur, unter Vernetzung eignen sich Polyisocyanate. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-lsocyanato-3,3,5-trimethyl-5-isocyanatomethyl-cyclohexan (IPDI), 2,4'- und/oder 4,4'-Diisocyanato-dicyclohexylmethan, 2,4'- und/oder 4,4'-Diisocyanato-diphenylmethan oder Gemische dieser Isomeren mit ihren höheren Homologen, wie sie in an sich bekannter Weise durch Phosgenierung von Anilin-Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP 0 470 461 beschrieben werden. Zu den besonders bevorzugten modifizierten Polyisocyanaten gehören das N,N',N"-Tris-(-6-isocyanatohexyl)-biuret und seine Gemische mit seinen höheren Homologen, sowie das N,N',N"-Tris-(-6-isocyanatohexyl)-isocyanurat bzw. dessen Gemische mit seinen höheren, mehr als einen Isocyanuratring aufweisenden Homologen.

Die Vernetzung kann durch Zusatz von organischen Metallverbindungen, wie Zinnverbindungen und gegebenenfalls tertiären Aminen, vorzugsweise Diäthyläthanolamin, katalysiert werden. Entsprechende Zinnverbindungen sind beispielsweise Dibutylzinndilaurat, Dibutylzinndiacetat und Dibutyloxozinn.

Für eine Härtung bei erhöhter Temperatur kommen zusätzlich verkappte Polyisocyanate, Polycarbonsäuren bzw. deren Anhydride in Frage.

Wäßrige 2-Komponenten Beschichtungsmittel werden gleichfalls meist mit verkappten Polyisocyanaten, Polycarbonsäuren bzw. deren Anhydride bei moderaten Temperaturen gehärtet.

Auch im Industrie-, Kunststoff- und Holzbereich werden zunehmend moderne Beschichtungsmittel eingesetzt. So können zum Beispiel die oben erwähnten "high solid" Bindemittel auch in diesen Bereichen als Klar- oder pigmentierte Decklacke eingesetzt werden. Außerdem ist darauf hinzuweisen, daß die wasserverdünnbaren Acrylatharze als Klar- oder pigmentierte Decklacke im 2-Komponentenbereich für die Metall-, Kunststoff- und Holzlackierung ein wichtige Rolle spielen.

Deshalb sollen die Beispiele aus dem Automobilbereich nur die Erfindung näher erläutern, ohne sie jedoch einzuschränken.

In Beschichtungsmitteln, die mit den erfindungsgemäßen Copolymerisaten 1 hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe, Füllstoffe wie Talkum, Glimmer, Kaolin, Kreide, Quarzmehl, Asbestmehl, Schiefermehl, verschiedene Kieselsäuren und Silikate, viskositätskontrollierende Zusätze, Mattierungsmittel, UV-Absorber, Lichtschutzmittel, Antioxidantien, Peroxidzersetzer, Entschäumer, Netzmittel und aktive Verdünner-Reaktiwerdünner.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden.

Sie können in der Wärme appliziert werden, gegebenenfalls können sie durch Eindrücken von superkritischen Lösemitteln (z.B. CO₂) in eine applikationsfertige Form gebracht werden.

Die erfindungsgemäßen Copolymerisate 1 lassen sich auch als Härter für verschiedene Kunstharze, insbesondere Epoxyharze und Dispersionen dieser Harze, einsetzen.

Die erfindungsgemäßen Pulverbeschichtungsmittel enthalten mindestens ein erfindungsgemäßes Copolymerisat 2 und ein Härtungsmittel.

Die in der Erfindung als Härtungsmittel verwendeten aliphatischen zweibasigen Säuren, sind z.B. Adipinsäure, Pimelinsäure, Suberinsäure, Azelainsäure, Sebacinsäure, Malonsäure, Bernsteinsäure, Glutarsäure, 1,12-Dodecandisäure, usw. Die Anhydride dieser Säuren können ebenfalls verwendet werden, z.B. Glutarsäureanhydrid, Bernsteinsäureanhydrid, sowie Polyanhydride dieser Dicarbonsäuren. Diese Polyanhydride werden durch intermolekulare Kondensation der genannten aliphatischen zweibasigen Dicarbonsäuren erhalten. Beispiele sind Adipinsäure(poly)anhydrid, Azelainsäure(poly)anhydrid, Sebacinsäure(poly)anhydrid, Dodecandisäure(poly)anhydrid usw.. Die Polyanhydride haben eine gewichtsmittlere Molmasse (Polystyrol-Standard) von 1.000 bis 5.000 g/mol. Die Polyanhydride können auch, wie in der EP 0 299 420 beschrieben, mit Polyolen modifiziert werden. Die Polyanhydride sind bei Raumtemperatur fest.

Die Polyanhydride können auch im Gemisch mit den aliphatischen zweibasigen Dicarbonsäuren als Härtungsmittel eingesetzt werden oder im Gemisch mit Hydroxycarbonsäuren, die Schmelzpunkte zwischen 40 °C und 150 °C besitzen, z.B. 12-Hydroxy-Stearinsäure, 2- bzw. 3- bzw. 10-Hydroxyoctadecansäure, 2-Hydroxymyristinsäure.

Die Menge der als Härtungsmittel eingesetzten Anhydride und Säuren, bezogen auf das Acrylatharz, kann über einen weiten Bereich variieren und richtet sich nach der Anzahl der Epoxidgruppen im Acrylatharz. Im allgemeinen wird ein Molverhältnis von Carboxylgruppen bzw. Anhydridgruppen zu Epoxidgruppen von 0,4 bis 1,4:1, bevorzugt von 0,8 bis 1,2:1 gewählt.

Der Pulverlack kann die üblichen Pigmente und Füllstoffe enthalten. Er kann darüber hinaus auch einen Katalysator enthalten, um die Vernetzungsgeschwindigkeit zu erhöhen und die Härtungstemperatur zu erniedrigen. Geeignete Katalysatoren sind Tetraalkylammonium- oder Phosphoniumsalze, Imidazole, tertiäre Amine, Metallsalze von organischen Carbonsäuren oder Phosphine. In den meisten Fällen ist die Anwesenheit eines Katalysators jedoch nicht erforderlich.

Der Pulverlack kann außerdem verschiedene Additive enthalten, die üblicherweise in Pulverlacken eingesetzt werden, insbesondere Entgasungsmittel wie z.B. Benzoin, das im allgemeinen in Mengen von 0,1 bis 3 % eingesetzt wird. Weiterhin können Verlaufsmittel verwendet werden z.B. oligomere Poly(meth)acrylate, wie z.B. Polylauryl(meth)acrylat, Polybutyl(meth)acrylat, Poly-2-äthyl-hexyl(meth)acrylat oder fluorierte Polymere oder Polysiloxane. Zur Verbesserung der Wetterbeständigkeit können die bekannten UV-Absorber und Antioxidantien zugegeben werden.

Die Komponenten des Pulverlacks werden zunächst trocken gemischt und anschließend mit einem Doppelschneckenextruder bei einer Temperatur von 80 bis 130 °C, vorzugsweise 80 bis 100 °C extrudiert. Das Extrudat wird nach Abkühlung und Zerkleinerung in einer Mühle gemahlen, wobei eine mittlere Teilchengröße von 20 bis 90 nm, vorzugsweise 40 bis 70 nm angestrebt wird. Ein eventuell vorhandener Grobkornanteil kann abgesiebt werden.

Der Pulverlack wird nach einer der üblichen Methoden, beispielsweise durch elektrostatisches oder Tribospritzen appliziert. Nach der Applikation wird bei einer Temperatur von 120 bis 200 °C ausgehärtet, vorzugsweise liegt die Härtungstemperatur bei 130 bis 160 °C.

Der Pulverlack eignet sich besonders als Klarlack auf wäßrigen Basislacken. Man erhält 2-Schicht-Lackierungen mit außergewöhnlicher Oberflächenglätte, Glanz, Chemikalien- und Wetterbeständigkeit.

### Beispiele:

### I.a) Herstellung der Copolymerisate 1 ("high solid" Bindemittel)

In einem mit Rührwerk, Inertgaseinleitung, Heiz- und Kühlsystem und Zugabeeinrichtung ausgestatteten Reaktor, wird der Glycidylester einer α,α-Dialkylalkanmonocarbonsäure [z.B. Glycidylester der ®Versatic 10 bzw. 5-Säure (Handelsname: Cardura® E 10 bzw. Cardura® E 5, Shell Chemicals)] (z.T. in Lösemittel oder Lösemittelgemischen) vorgelegt und unter Inertgas auf die gewünschte Temperatur aufgeheizt. Dann wird innerhalb 6 Stunden die Monomerenmischung gemäß Tabelle 1 (z.T. in Lösemittel oder Lösemittelgemischen) zusammen oder getrennt mit Initiator oder Initiatormischungen (z.T. in Lösemittel oder Lösemittelgemischen) gleichmäßig zudosiert. Anschließend wird noch 2 Stunden nachpolymerisiert, bis ein Umsatz von mindestens 95 % erreicht ist.

Falls der Festkörpermassengehalt nach der Polymerisation unter 97,5 % liegt, wird der Ansatz entweder vor oder während der Nachpolymerisation mit 1/10 der Ausgangsinitiatormenge (ohne/mit Lösemittel) nachgeimpft oder die Restmonomeren (einschließlich Initiatorfragmente und Lösemittel) werden in einer Vakuumdestillation abgetrennt.

Die Copolymerisate werden in geeigneten Lösemitteln oder Lösemittelgemischen angelöst.

Alle Copolymerisate werden durch eine geeignete Filtereinrichtung filtriert. Die genauen Ansätze für die Herstellung der Copolymerisate in Gewichtsteilen, Reaktionsbedingungen und Kennzahlen der Produkte sind aus der nachstehenden Tabelle zu entnehmen.

**Tabelle 1:**

| **Herstellung und Eigenschaften der Copolymerisate 1a** | | | | |
|---|---|---|---|---|
| **Ansatz (Teile)** | **Copolymer 1 (Vergleich)** | **Copolymer 2 (Vergleich)** | **Copolymer 3** | **Copolymer 4** |
| | | | | |
| Glycidylester (Cardura® E10) | 24,18 | 22,45 | 24,18 | 22,45 |
| Acrylsäure | 3,54 | - | 3,54 | - |
| Methacrylsäure | 7,69 | 10,72 | 7,69 | 10,72 |
| Hydroxyäthylmethacrylat | 19,85 | 18,05 | 19,85 | 18,05 |
| Polypropylenglykol(n=5 oder 6)- | - | 0,95 | - | 0,95 |
| monomethacrylat | | (n =5) | | (n =5) |
| Isobornylmethacrylat | 14,89⁺ | 10,07⁺ | 14,89* | 10,07* |
| Isobornylacrylat | - | - | - | - |
| Methylmethacrylat | 7,18 | 4,82 | 7,18 | 4,82 |
| Styrol | 22,67 | 32,94 | 22,67 | 32,94 |
| Initiator (DTAP) | 1,50 | 1,50 | 1,50 | 1,50 |
| Polymerisationstemperatur (°C) | 170 | 175 | 170 | 175 |
| FK (%) nach Polymerisation | 97,2 | 98,1 | 98,1 | 97,8 |
| nach Destillation | 98,4 | - | - | - |
| FK (%) Lff. (in Butylacetat) | 70,1 | 70,4 | 70,0 | 70,2 |
| Säurezahl (mg KOH/g FH) | 22,3 | 23,3 | 23,0 | 22,8 |
| Hydroxylzahl (mg KOH/g FH) | 134,8 | 136,0 | 135,1 | 133,1 |
| Viskosität (mPa s), 23°C (Lff.) | 3280 | 5860 | 3320 | 5790 |
| Viskosität (mPa s), 23°C | | | | |
| (50%ig in BuAc) | 51 | 58 | 52 | 56 |
| GPC (PS-Eichung) | | | | |
| M_{w} (g/mol) | 3800 | 4380 | 3860 | 4320 |
| M_{w} (g/mol) | 1780 | 2160 | 1840 | 2160 |
| U = M_{w}/Mₙ | 2,1 | 2,0 | 2,1 | 2,0 |
| Hazen-Farbzahl (DIN 53995) | 51 | 36 | 45 | 41 |
| Tg (DSC-Messung, °C) | 24 | 23 | 29 | 30 |
| Aussehen | transparent | transparent | transparent | transparent |

| | | | | |
|---|---|---|---|---|
| ⁺ Isomerenverteilung nach dem herkömmlichen zweistufigen Verfahren | | | | |
| * Isomerenverteilung nach dem neuen einstufigen Verfahren FK: Festkörpermassengehalt, FH: Festharz Lff.: Lieferform n: mittlerer Polymerisationsgrad des Polypropylenglykols Tg: Glasübergangstemperatur des Festharzes, DSC-7 Perkin Elmer,10 K/Min. Initiator: DTAP : Di-tert.-amylperoxid: (Interox® DTAP) (Peroxid Chemie) GPC: M_{w}, Mₙ Millipore® Waters Chromatographie System 860 Pumpe: Model 590 RI-Detektor: Model 410 Säulensetz: Waters Utrastyragel 2 x LINEAR + 1 x 500 Å Lösungsmittel: Tetrahydrofuran bei 40 °C Durchfluß: 1 ml/min., Konzentration: 1 %ig auf Festkörper Kalibrierung: Polystyrol (Fa. PSS, Mainz) Bestimmung der Kenndaten: Säurezahl, Hydroxylzahl, Epoxidzahl und Viskosität (Normen siehe "Analytische Bestimmungsmethoden", Broschüre: Kunstharze Hoechst, Ausgabe 1982; Fa. Hoechst AG, Frankfurt/Main) Hazenfarbzahl nach DIN 53995 (LTM1, Fa. Dr. Lange GmbH, Berlin) | | | | |

Die hergestellten Copolymere 1 bis 4 weisen geringste zahlenmittlere Molmassen und niedrigste Lösungsviskositäten (Ubbelohde: 50 %ig in Butylacetat bei 23 °C) auf.
Die Glasübergangstemperaturen sind bei den Copolymeren 3 und 4 um 5 bzw. 7 °C höher als bei den Vergleichspolymeren 1 und 2.

### b) Herstellung der Copolymerisate 1 (wasserverdünnbare Bindemittel)

Die Ester I werden in einer Rückflußapparatur vorgelegt und auf 180 °C aufgeheizt. Die Monomerenmischung II mit dem darin gelösten Starter III (siehe Tabelle 2) wird nun innerhalb von 8 Std. gleichmäßig unter Stickstoff zudosiert. Anschließend läßt man 2 Std. bei gleicher Temperatur nachreagieren. Der Ansatz wird nun auf 130 °C abgekühlt und dann mit der Zugabe des Lösemittels IV begonnen. Nach Beendigung der Zugabe kühlt man auf 80 °C ab und fügt unter Rühren das Neutralisationsamin V innerhalb von 1 Std. und anschließend das entsalzte Wasser VI innerhalb von 2 Std. zu. Unter Rühren wird nun auf 25 °C abgekühlt und filtriert.

**Tabelle 2:**

| **Herstellung und Eigenschaften der Copolymerisate 1b** | | | | | |
|---|---|---|---|---|---|
| **Ansatz (Teile)** | | **Copolymer 5 (Vergleich)** | **Copolymer 6 (Vergleich**) | **Copolymer 7** | **Copolymer 8** |
| Maleinsäurediäthylester | I | - | 5,6 | - | 5,6 |
| Glycidylester (Cardura® E10) | | 20,2 | 13,4 | 20,2 | 13,4 |
| Acrylsäure | II | 9,0 | 7,1 | 9,0 | 7,1 |
| n-Butylacrylat | | 15,2 | - | 15,2 | - |
| 4-Hydroxybutylacrylat | | - | 18,8 | - | 18,8 |
| 2-Hydroxyäthylmethacrylat | | - | 9,3 | - | 9,3 |
| 2-Hydroxypropylacrylat | | 9,6 | - | 9,6 | - |
| Isobornylacrylat | | 23,0⁺ | - | 23,0* | - |
| Isobornylmethacrylat | | - | 29,1⁺ | - | 29,1* |
| Methylmethacrylat | | - | 6,5 | - | 6,5 |
| Styrol | | 23,0 | 10,2 | 23,0 | 10,2 |
| Di-tert.-butylperoxid | III | 1,5 | 1,5 | 1,5 | 1,5 |
| 1-Butanol | IV | 42,9 | 25,0 | 42,9 | 25,0 |
| N,N-Dimethylaminoäthanol | V | 2,3 | - | 2,3 | - |
| 2-Amino-2-methyl-1-propanol | | - | 2,4 | - | 2,4 |
| Wasser | VI | 87,4 | 99,9 | 87,4 | 99,9 |
| Säurezahl (auf FK, ber.) | | 20,7 | 22,0 | 21,1 | 21,5 |
| Hydroxylzahl (auf FK, ber.) | | 91,0 | 146,5 | 90,5 | 143,3 |
| Verdünnung(%, ber.) | | 70,0 | 80,0 | 70,0 | 80,0 |
| Neutralisationsgrad (%) | | 70,0 | 70,0 | 70,0 | 70,0 |
| Festkörper (%, ber.) | | 43,0 | 44,0 | 43,0 | 44,0 |
| Viskosität (23°C, mPa·s) | | 2890 | 2610 | 2850 | 2640 |
| M_{w} (g/mol) | | 28700 | 25600 | 28760 | 25510 |

| | | | | | |
|---|---|---|---|---|---|
| ⁺ Isomerenverteilung nach dem herkömmlichen zweistufigen Verfahren | | | | | |
| * Isomerenverteilung nach dem neuen einstufigen Verfahren | | | | | |

### c) Herstellung der Copolymerisate 2 (Pulverlackbindemittel)

Maleinsäuredimethylester wurde vorgelegt und auf 175 °C erwärmt. Dann wurde die Monomerenmischung zusammen mit dem Initiator bei 175 °C innerhalb von 7 Std. gleichmäßig zudosiert. Anschließend hielt man noch 1 Std. bei dieser Temperatur und destillierte dann im Vakuum (18 mbar) flüchtige Bestandteile (Initiatorspaltprodukte) ab. Man erhielt ein festes, farbloses Harz. Die Zusammensetzungen und Kenndaten sind in Tabelle 3 zusammengestellt (Gew.-Teile):

**Tabelle 3:**

| **Herstellung und Eigenschaften der Copolymerisate 2** | | |
|---|---|---|
| **Ansatz (Teile)** | **Copolymer 9 (Vergleich)** | **Copolymer 10** |
| | | |
| Di-methylmaleinat | 15,35 | 15,35 |
| Styrol | 45,02 | 45,02 |
| Isobornylmethacrylat | 23,52⁺ | 23,52* |
| Glycidylmethacrylat | 15,11 | 15,11 |
| Methylmethacrylat | 0,50 | 0,50 |
| Di-tert.-butylperoxid | 0,50 | 0,50 |
| Visk. (Platte, Kegel, D = 100 s, 170 °C) (mPa·s) | 6800 | 6300 |
| Glastemperatur (°C) | 56 | 61 |
| M_{w} (g/mol) | 7310 | 7280 |
| Epoxidzahl (g Ep-O/100 g) | 1,6 | 1,6 |
| Epoxidäquivalentgewicht (g/mol) | 1000 | 1000 |

| | | |
|---|---|---|
| ⁺ Isomerenverteilung nach dem herkömmlichen zweistufigen Verfahren | | |
| * Isomerenverteilung nach dem neuen einstufigen Verfahren | | |

Die hergestellten Copolymere 9 und 10 weisen geringe Schmelzviskositäten (170 °C) auf. Die Glasübergangstemperatur ist beim Copolymeren 10 um 5 °C höher als beim Vergleichspolymeren 9.

### II. Herstellung der Beschichtungsmittel

### 1.) Formulierung eines "high solid" 1-Komponentenlackes (Autoserie)

Zu ca. 75 Gewichtsteilen des hergestellten Acrylatharz-Bindemittels Copolymer 1 bzw. 3 werden unter Rühren 30,0 Gewichtsteile einer 75 %igen Lösung eines handelsüblichen, hochreaktiven Melamin-Formaldehydharzes in iso-Butanol (®Maprenal VMF 3926), 0,75 Gewichtsteilen eines UV-Absorbers vom Benzotriazol-Typ (®Tinuvin 1130, 100 %), 0,75 Gewichtsteilen eines Radikalfängers vom HALS-Typ (®Tinuvin 292, 100 %) zugegeben und gut vermischt.

Unter weiterem Rühren wird mit einem Gemisch aus 7,5 Gewichtsteilen iso-Butanol, 7,5 Gewichtsteilen ®Solvesso 150 und 7,5 Gewichtsteilen Butylglykol verdünnt.

Danach wird der Klarlack mit 19,0 Gewichtsteilen eines Lösemittelgemisches aus 20 Teilen ®Solvesso 100, 10 Teilen Xylol und 10 Teilen Methoxypropylacetat auf eine Applikationsviskosität von 25 Sekunden mit dem Auslaufbecher (DIN 53 211, 4 mm, 23°C) eingestellt.

Anschließend werden dem Lack 0,15 Gewichtsteilen eines "Slip"-Additivs (®Additol XL 121, 0,1 % auf Gesamtlack) unter Rühren zugemischt.

Die erhaltenen Klarlacke 1 und 3 besitzen schließlich einen Applikationsfeststoffgehalt von 54 % (gemessen in Anlehnung an DIN 53 216 / 1 h, 120 °C).
®Maprenal VMF 3926 hochreaktives Melamin-Formaldehydharz in iso-Butanol (Fa. Cassella AG, Offenbach)
®Tinuvin 292 "HALS" (Fa. Ciba Geigy, Basel)
®Tinuvin 1130 UV-Absorber (Fa. Ciba Geigy, Basel)
®Additol XL 121 "Slip"additiv (Fa. Hoechst AG, Frankfurt/Main)

### 2.) Formulierung eines "high solid" 2-Komponentenlackes (Autoreparatur und Industrie-Lack)

Zur Herstellung der erfindungsgemäßen härtbaren Beschichtungsmittel werden die Komponenten bestehend aus einem hydroxylgruppenhaltigen Copolymerisat oder einer Mischung mehrerer solcher oder anderer hydroxylgruppenhaltiger Copolymerisate mit den Hilfs- und Zusatzstoffen, Lösungsmitteln und Vernetzern im beschriebenen Mischungsverhältnis (Tabelle 4) gemischt und mit weiterem Verdünnungsmittel auf die Spritzviskosität von 20 bis 21 Sekunden mit dem Auslaufbecher (DIN 53 211, 4 mm, 23 °C) eingestellt. Bei Komponenten mit niedriger Viskosität kann dies in Substanz erfolgen, wobei gegebenenfalls auf höhere Temperaturen erwärmt wird. Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit dem Copolymerisat oder einer Mischung mehrerer solcher oder anderer Copolymerisate oder einem geeigneten speziellen Anreibeharz in einem Dispergieraggregat geeigneter Bauweise eine Pigmentpaste erzeugt. Diese wird gemischt und unter Zufügen weiterer Verdünnungsmittel oder lacktypischer Zusätze komplettiert. Gegebenenfalls kann weiteres Bindemittel auf Basis der erfindungsgemäßen Copolymerisate oder ein Fremdharz, das mit den übrigen Komponenten des Lacksystems verträglich ist, zugemischt werden. Die Topfzeit und die Eigenschaften der resultierenden Filme hängen dabei von den Verfahrensbedingungen, d.h. von der Art und Menge der Ausgangsstoffe, Dosierung des Katalysators, der Temperaturführung etc. ab. Obwohl die Härtung in der Regel diskontinuierlich erfolgt, liegt es auch im Rahmen der Erfindung, das Vermischen der Komponenten und den Reaktionsverlauf kontinuierlich durchzuführen, beispielsweise mittels einer automatischen Lackiervorrichtung.

**Tabelle 4:**

| **Herstellung der "high solid" Klarlacke** | | | | |
|---|---|---|---|---|
| | Copolymerisate | | | |
| Ansatz | 1 | 2 | 3 | 4 |
| Aussehen | transparent | transparent | transparent | transparent |
| FK (%) | 70,1 | 70,4 | 70,0 | 70,2 |
| OH-Zahl (mgKOH/g)/OH-Gehalt (%) | 135/4,1 | 136/4,1 | 135/4,1 | 133/4,0 |
| Visk. 50%ige Lösung (mPa·s) | 51 | 58 | 52 | 56 |
| | | | | |
| Bindemittel | 82 | 82 | 82 | 82 |
| Tinuvin® 292 | 0,5 | 0,5 | 0,5 | 0,5 |
| Tinuvin® 1130 | 1,5 | 1,5 | 1,5 | 1,5 |
| Si Öl LO 50% 10%ig | 1 | 1 | 1 | 1 |
| Solvesso® 100 | 1,5 | 1,5 | 1,5 | 1,5 |
| Xylol | 2,5 | 2,5 | 2,5 | 2,5 |
| BuAc | 11 | 11 | 11 | 11 |
| | | | | |
| Desmodur® N 3390 | 29,5 | 29,9 | 29,5 | 29,1 |
| | | | | |
| Auslaufbecher | 21 | 21 | 21 | 21 |
| (DIN 53 211) | | | | |
| (Sekunden) | | | | |
| | Vergleich | Vergleich | neu | neu |
| Lackbezeichnung | Lack 1 | Lack 2 | Lack 3 | Lack 4 |
| Tinuvin® 292 "HALS" (Fa. Ciba Geigy, Basel) Tinuvin® 1130 UV-Absorber (Fa. Ciba Geigy, Basel) Si Öl LO 50% Verlaufsmittel Silikonöl (Fa. Wacker Chemie GmbH, Burghausen) Desmodur® N 3390 Isocyanurat-Gruppen aufweisendes Polyisocyanat (Fa. Bayer AG, Leverkusen) BuAc Butylacetat | | | | |

### 3.) Pigmentierte Zweikomponenten-Lacke

Gemäß den Angaben in Tabelle 5 werden Zwei-Komponenten-Weißlacke formuliert. Die Lacke tragen die Bezeichnung Lack 5 und Lack 6.

**Tabelle 5:**

| **Herstellung von pigmentierten Lacken (Weißlacke)** | | |
|---|---|---|
| Bindemittel | Copolymerisat 2 (Vergleich) | Copolymerisat 4 |
| FK % | 70,4 | 70,2 |
| OH-Zahl/% OH | 136/4,1 | 133/4,0 |
| Bindemittel | 55 | 55 |
| TiO₂ - 2310 | 29,2 | 29,2 |
| Bentone® 34 | 2,5 | 2,5 |
| (10% Paste in Xylol) | | |
| Additole XL 260 | 1 | 1 |
| Si Öl LO 50%/10% | 1 | 1 |
| Solvesso® 100 | 1,5 | 1,5 |
| BuAc | 5,2 | 5,2 |
| Xylol | 2,5 | 2,5 |
| Methoxypropylacetat | 2,1 | 2,1 |
| Desmodur® N 3390 | 20,0 | 19,5 |
| Bindemittel: | | |
| Pigment | 1:0,5 | 1:0,5 |
| Auslaufbecher | | |
| (DIN 53 211) | 21 | 21 |
| (Sekunden) | | |
| Lackbezeichnung | Lack 5 | Lack 6 |
| TiO₂ - 2310 Weißpigment (Fa. Kronos Titan GmbH, Leverkusen) Bentone® 34 Antiabsetzmittel (Fa. Kronos Titan GmbH, Leverkusen) Additol® XL 260 (Fa. Vianova GmbH, Graz) Si Öl LO 50% Verlaufsmittel Silikonöl (Fa. Wacker Chemie GmbH, Burghausen) Desmodur® N 3390 Isocyanurat-Gruppen aufweisendes Polyisocyanat (Fa. Bayer AG, Leverkusen) BuAc Butylacetat | | |

### 4.) Autoreparatur-Füller

Gemäß den Aufgaben in Tabelle 6 werden Zwei-Komponenten-Füller formuliert. Sie tragen die Bezeichnung Füller 1 und Füller 2.

**Tabelle 6:**

| **Herstellung von Füllern (Autoreparatur)** | | |
|---|---|---|
| Bindemittel | Copolymerisat 1 (Vergleich) | Copolymerisat 3 |
| FK % | 70,1 % | 70,0 % |
| OH-Zahl/% OH | 135/4,1 | 135/4,1 |
| Bindemittel | 18 | 18 |
| Butylacetat | 15,7 | 15,7 |
| Methoxypropylacetat | 12,4 | 12,4 |
| Bentone® 34 10% | 5 | 5 |
| Additol® XL 270 | 0,5 | 0,5 |
| Bayferrox® 316 (Schw) | 0,2 | 0,2 |
| Bayferrox® 3920M (gelb) | 0,3 | 0,3 |
| Zn-Oxyd NT/S | 2,2 | 2,2 |
| Talkum AT ex | 6 | 6 |
| TiO₂ 2059 | 10,4 | 10,4 |
| Kaolin W | 18,4 | 18,4 |
| Zn-Phosphat ZP 10 | 8,5 | 8,5 |
| BuAC | 2,4 | 2,4 |
| --- | --- | --- |
| | 100 | 100 |
| Desmodur® N 75% | 7,4 | 7,4 |
| Bindermittel: | | |
| Pigment | 1:2,5 | 1:2,5 |
| Auslaufbecher | | |
| (DIN 53 211) | 21 | 21 |
| (Sekunden) | | |
| Lackbezeichnung | Füller 1 | Füller 2 |
| Bentone® 34 Antiabsetzmittel (Fa. Kronos Titan GmbH, Leverkusen) Additol® XL 270 (Fa. Vianova GmbH, Graz) Bayferrox® 316 (schwarz) Bayferrox® 3920 (gelb) (Fa. Bayer AG, Leverkusen) Zn-Oxy NT/S Zn-Phosphat (Fa. Dr. Hans Heubach GmbH, Langelsheim) Talkum AT ex (Fa. Norwegian Talc Deutschland GmbH, Bad Soden-Salmünster) Kaolin W (Fa. C.H. Erbslöh, Düsseldorf) Desmodur® N 75% Polyisocyanat (Fa. Bayer AG, Leverkusen) | | |

### 5.) Formulierung eines wäßrigen 1K-Einbrenn-Klarlackes

11,86 Teile eines wassergelösten teilmethylierten Melamin-Formaldehyd-Harzes (Maprenal® VMF 3921 w, 85 % Wasser, Vernetzer) werden vorgelegt und 0,35 Teile Additol® XW 392 in Lieferform (Verlaufsmittel) zugegeben. Zu dieser Mischung werden 96,4 Teile der Copolymere 5 bzw. 7 addiert (Bindemittel-Melaminharz-Verhältnis, fest auf fest, 80:20). Anschließend werden 10 Teile eines Butyldiglykol/Wasser-Gemisches (1:1) und ca. 14 Teile deion. Wasser zur Einstellung der Spritzviskosität von 18 - 20 s Auslaufzeit, 4-DIN-Becher, 23 °C, verwendet. Der pH-Wert wird, falls nötig, mit Dimethyläthanolamin auf pH = 8 eingestellt. Der entlüftete Lack wird mit 150 µm Naßfilmstärke auf Gradientenbleche aufgezogen und 20 Minuten bei 100 bis 160 °C eingebrannt (Lack 7 und Vergleich).

### 6.) Formulierung eines wäßrigen 1K-Einbrenn-Unidecklackes

Circa 60 Teile der Copolymerisate 6 bzw. 8 werden vorgelegt, mit 0,9 Teilen Additol® XL 250 (Netzmittel, 0,5 % auf Gesamtlack), 0,4 Teile Additol® VXW 4973 (Entschäumer, 0,2 % auf Gesamtlack), 40,2 Teile Titandioxid CL 2310® (Pigment, Bindemittel-Pigment-Verhältnis: 100:70) und 6 Teile deionisiertem Wasser vermischt und 20 Minuten bei 6000 U/min unter Kühlung in einer Perlmühle (2-mm Perlen) abgerieben und mit einer Vormischung aus 13,5 Teile Maprenal® VMF 3921 w (Vernetzer, 85 % in Wasser), 0,3 Teile Additol® XW 390 (Verlaufsmittel, 0,5 % auf Gesamtlack) und 13,8 Teile deion. Wasser unter leichtem Rühren versehen. Der entlüftete Lack wird mit 150 µm Naßfilmstärke auf Gradientenbleche aufgezogen und 20 Minuten bei 100 bis 160 °C eingebrannt (Lack 8 und Vergleich).

### 7.) Formulierung eines wäßrigen 2K-Klarlackes

### Stammkomponente:

Zu 99,4 Gewichtsteilen des Copolymers 6 oder 8 gemäß Tabelle 2 gibt man 0,6 Gewichtsteile eines handelsüblichen Entschäumers (®Additol XW 314 der Fa. Hoechst AG) und rührt 10 min mit einem Dissolver.

### Härterkomponente:

16,5 Gewichtsteile ®Bayhydur LS 2032 (Polyisocyanathärter auf Basis Hexamethylendiisocyanat, Bayer AG) und 16,5 Gewichtsteile ®Bayhydur VPLS 2150 (Polyisocyanathärter auf Basis Isophorondiisocyanat) werden mit 2,0 Gewichtsteilen Methoxypropylacetat verrührt.

Die Härterlösung wird unter Rühren (Hand) zu der Stamm komponente gegeben. Das Verhältnis OH-Equivalente zu NCO-Equivalenten beträgt 1 : 1, der Lack hat einen Festkörper von 52,2% und eine Dichte (DIN 53 217, 23 °C) von 1,05 g/cm³. Anschließend wird mit demineralisiertem Wasser auf eine Auslaufviskosität gem DIN 53 211, 23 °C, Becher # 4, von 70 Sekunden eingestellt (Lack 9 und Lack 10 (Vergleich)).

### 8.) Herstellung eines Pulver-Klarlackes

773 Teile des Copolymeren 9 bzw. 10, 185 Teile Dodecandisäurepolyanhydrid und 3 Teile Benzoin wurden zunächst trocken gemischt. Diese Mischung wurde dann auf einen Laborextruder bei Temperaturen von 80 - 120 °C in der Schmelze dispergiert. Das Extrudat wurde nach Abkühlung und Vorzerkleinerung auf einer Gebläsemühle auf eine durchschnittliche Korngröße von 50 µm zu einem Pulverlack gemahlen. Der Grobkornanteil von Teilchengrößen oberhalb 90 µm wurde abgesiebt. Der Pulverlack wurde mit einer elektrostatischen Pulversprühanlage bei 60 kV auf entfettete, geerdete Eisenbleche so aufgespritzt, daß nach dem Einbrennnen bei 140 °C/30 min eine Schichtdicke von 60 µm resultierte (Lack 11 und Vergleich).

### III. Lacktechnische Prüfung

### 1.) Lacktechnische Prüfung von "high solid" 1-Komponenten-Klarlacken (Autoserienlacke)

Der wie unter II.1 beschrieben hergestellte Klarlack und der Vergleich werden nach Entlüften mit 150 µm Naßfilmschichtdicke auf Gradientenbleche (Sondertiefziehmaterial mit RP-Oberfläche nach DIN 1624) aufgezogen und 20 Minuten bei 100 bis 160 °C im Gradientenofen eingebrannt.

Die so erhaltenen klaren und hochglänzenden Lackierungen wurden geprüft. Die Prüfergebnisse sind in der folgenden Tabelle 7 zusammengefaßt.

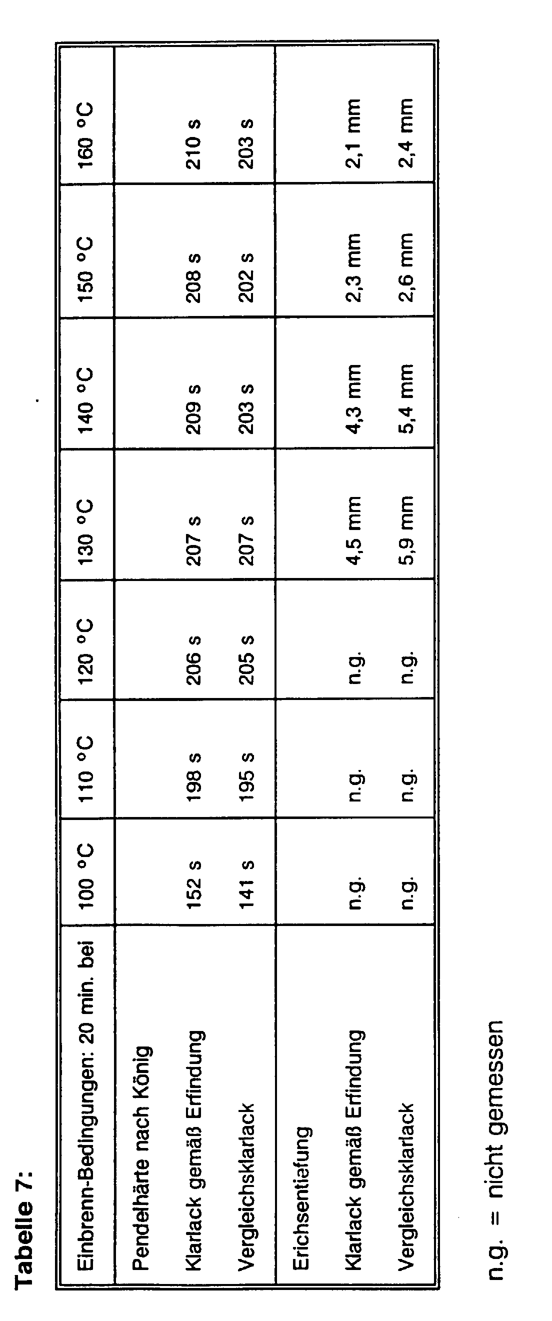

### Fazit :

Die oben beschriebenen Versuche zeigen, daß der Einsatz des erfindungsgemäßen Acrylatharz-Bindemittels bei der Formulierung von 1K-Automobilklarlacken zu festkörperreichen und bereits im unteren Einbrennbereich hochreaktiven (siehe Pendelhärte) Klarlacken führt.

Die Beständigkeiten gegenüber Xylol und Schwefelsäure sind bei beiden Beschichtungsmitteln hervorragend.

### 2a) Lacktechnische Prüfung von "high solid" 2-Komponenten-Klarlacken (Autoreparatur- und Industrie-Lack)

Die in 11.2. beschriebenen Lacksysteme wurden mittels 100 µm Rakeln auf gereinigte Glasplatten appliziert und unter den Bedingungen der Lufttrocknung und forcierter Trocknung (45 Minuten bei 60 °C) geprüft (Tabelle 8).

**Tabelle 8:**

| **Lacktechnische Prüfung der "high solid" Klarlacke (Autoreparatur-Industrie)** | | | | |
|---|---|---|---|---|
| Lackbezeichnung | Lack 1 (Vergleich) | Lack 2 (Vergleich) | Lack 3 | Lack 4 |
| | | | | |
| Aussehen | transparent | transparent | transparent | transparent |
| | | | | |
| Ausgng./Topfzeit | 6 h/8 h gel. | 6 h/8 h gel. | 6 h/8 h gel. | 6 h/8 h gel. |
| Staubtrocknung | 6' | 8' | 7' | 7' |
| Klebfreitrocknung | 2 h | 1,5 h | 1,5 h | 1,5 h |
| FK-1h 125°C (%) | 61,5 | 60,7 | 60,8 | 61,0 |
| | | | | |
| Pendelhärte (s) nach | | | | |
| 24h | 101 | 96 | 105 | 95 |
| 2 d | 134 | 141 | 144 | 153 |
| 5 d | 197 | 188 | 198 | 192 |
| 10 d | 221 | 205 | 215 | 212 |
| | | | | |
| Superbenzinbeständigkeit nach 10 d in Min. | > 30' | > 30' | > 30' | > 30' |
| Pendelhärte nach 45'60°C-Trocknung | | | | |
| 24h | 166 | 171 | 172 | 179 |
| 2d | 203 | 201 | 208 | 205 |
| 5d | 219 | 208 | 218 | 216 |
| | | | | |
| 45'60°C-Trocknung Superbenzin nach 5 d in Min. | > 30' | > 30' | > 30' | > 30' |
| Pendelhärten nach König FK Festkörpermassengehalt nach DIN 53 216 d Tage h Stunden ' Minuten gel. geliert | | | | |

### Fazit:

Die erfindungsgemäßen Beschichtungsmittel weisen in praxisgerechten formulierten Klarlacken unkatalysiert sehr hohe Filmhärten und Beständigkeiten mit höchster Trocknungsgeschwindigkeit (Klebfreiheit) auf.

Der Decklackstand ist als gut einzustufen.

### 2b) Lacktechnische Prüfung von pigmentierten Lacken (Weißlacken)

Die wie in 11.3 gefertigten Lacksysteme wurden mittels 100 µm Rakel auf gereinigte Glasplatten appliziert und unter den Bedingungen der Lufttrocknung und forcierter Trocknung (45 Minuten bei 69 °C) geprüft.

**Tabelle 9:**

| **Lacktechnische Prüfung der Weißlacke (pigmentierte Lacke)** | | |
|---|---|---|
| Lackbezeichnung | Lack 5 (Vergleich) | Lack 6 |
| Ausgng./Topfzeit | 21"/> 24 h | 21"/ 24 h gel. |
| Staubtrocknung | 15' | 11' |
| Klebfreitrocknung | 3,5 h | 3 h |
| FK-1h 125°C (%) | 65,3 | 65,0 |
| Pendelhärte (s) nach | | |
| 24h | 63 | 70 |
| 2 d | 95 | 115 |
| 4 d | 122 | 135 |
| 5 d | 156 | 160 |
| 7 d | 181 | 191 |
| 10 d | 206 | 211 |
| Superbenzin nach 10 d in Min. | > 30 | > 30 |
| Pendelhärte nach 45'60°C-Trocknung | | |
| 24 h | 111 | 123 |
| 2 d | 171 | 170 |
| 3 d | 192 | 186 |
| 5 d | 201 | 203 |
| Superbenzin nach 5 d in Min. | > 30 | > 30 |
| Pendelhärten nach König FK Festkörpermassengehalt nach DIN 53 216 " Sekunden, ' Minuten, h Stunden, d: Tage | | |

### Fazit:

Die erfindungsgemäßen Beschichtungsmittel zeigen in praxisgerechten Weißlack-Formulierungen eine schnelle Trocknung und erhöhte Pendel härten zu Beginn der Aushärtung.

### 2c) Lacktechnische Prüfung von Füllern (Autoreparatur)

Die wie in II.4. gefertigten Füller wurden mittels 200 µm Rakel auf gereinigte Glasplatten appliziert und unter der Bedingung der Lufttrocknung geprüft.

**Tabelle 10:**

| **Lacktechnische Prüfung der Füller** | | |
|---|---|---|
| Lackbezeichnung | Füller 1 (Vergleich) | Füller 2 |
| Topfzeit | 3 h | 2,5 h |
| FK-1h 125°C (%) | 64 | 64,1 |
| Trockenschleifbarkeit nach 6 h | gut | sehr gut |
| Lösemittelfestigkeit Butylacetat 1 min nach 16 h | in Ordnung | in Ordnung |
| h Stunde FK Festkörperbestimmung nach DIN 53 216 | | |

### Fazit:

Mit einem der erfindungsgemäßen Bindemittel läßt sich ein Autoreparaturfüller mit sehr guter Trockenschleifbarkeit formulieren.

### 3.) Lacktechnische Prüfung von wäßrigen 1K-Einbrenn-Klarlacken

Die in II.5. formulierten und applizierten Einbrenn-Klarlacke ergaben kocherfreie, nicht vergilbende Lackfilme mit gutem Aussehen.

| | 100°C | 110°C | 120°C | 130°C | 140°C | 150°C | 160°C |
|---|---|---|---|---|---|---|---|
| Pendelhärte (s) Vergleich | 169 | 209 | 211 | 208 | 207 | 210 | 208 |
| Lack 7 | 175 | 210 | 212 | 209 | 211 | 211 | 213 |

### Fazit:

Der erfindungsgemäße nicht vergilbende Lackfilm weist noch höhere Pendelhärten auf.

Beide Lackfilme zeigen hohe Beständigkeiten gegen Schwefelsäure, Xylol und Aceton.

Die formulierten wasserverdünnbaren Einbrenn-Klarlacke eignen sich insbesondere zur Herstellung von Metalleffektlackierungen nach dem base-coat/clear-coat-Verfahren.

### 4.) Lacktechnische Prüfung von wäßrigen 1K-Einbrenn-Unidecklacken

Die in 11.6. formulierten und applizierten Einbrenn-Unidecklacken ergaben kocherfreie, nicht vergilbende Lackfilme mit gutem Aussehen.

| | 100°C | 110°C | 120°C | 130°C | 140°C | 150°C | 160°C |
|---|---|---|---|---|---|---|---|
| Pendelhärte (s) Vergleich | 179 | 197 | 199 | 196 | 196 | 194 | 196 |
| Lack 8 | 183 | 198 | 201 | 200 | 199 | 200 | 198 |
| | | | | | | | |
| Glanz 20° (%) Vergleich | 87 | 84 | 83 | 80 | 80 | 76 | 77 |
| Lack 8 | 88 | 83 | 83 | 81 | 80 | 76 | 77 |

### Fazit:

Der erfindungsgemäße nicht vergilbende Lackfilm weist noch höhere Pendelhärten und einen guten Glanz auf.

Die Beständigkeiten gegen Chemikalien sind gut.

### 5.) Wäßrige 2K-Holzlacke

Die erfindungsgemäßen wäßrigen Copolymerisate 1b wurden einer anwendungstechnischen Prüfung in wäßrigen, zweikomponentigen Holz-Klarlack-Formulierungen unterzogen. Hierzu wurden die wäßrigen Bindemittel mit einem Entschäumer ausgerüstet, unter Rühren mit einem in einem organischen Lösungsmittel gelösten Gemisch zweier Polyisocyanat-Härter versetzt, nach Viskositätseinstellung mit einem Kastenrakel auf die verschiedenen Prüfuntergründe appliziert und getrocknet. Im einzelnen wurden die folgenden Prüfungen durchgeführt (s. Tabelle 11):

### a) Filmtrübung:

visuelle Beurteilung, Prüfuntergrund Glas, Filmaufzug mit 100 µm Naßfilmstärke, Trocknung 5 min Ablüften 23 °C/50% rel. Luftfeuchte, danach 15 min 60 °C; Bewertungsskala: 0 = völlig klar und rißfrei, 5 = trübe milchig und/oder starke Risse oder Oberflächenstörungen.

### b) Verlauf:

visuelle Beurteilung, Prüfuntergrund Echtholz (Eiche) furnierte Spanplatte, Filmaufzug mit 100 µm Naßfilmstärke, danach 5 min Ablüften bei 23 °C/50% rel. Luftfeuchte und Trocknung 15 min 60 °C, danach Zwischenschliff mit Sandpapier Körnung 380, anschließend erneuter Filmaufzug mit 150 µm Naßfilmstärke und Ablüften/Trocknung wie zuvor; Bewertungsskala: 0 = glatt und störungsfrei, 5 = sehr wellig und unruhig.

### c) Staubtrocknung:

Prüfung mit Glasperlen gem. DIN 53 150, Prüfuntergrund Glas, Filmaufzug mit 100 µm Naßfilmstärke, Trocknung bei 23 °C/50% rel. Luftfeuchte.

### d) Pendelhärtenentwicklung:

Prüfung der Pendelhärte nach König gem. DIN 53 157, Prüfuntergrund Glas, Filmaufzug mit 150 µm Naßfilmstärke, Trocknung bei 23 °C/50% rel. Luftfeuchte.

### e) Erichsentiefung:

gem. DIN 53 156, Prüfuntergrund Erichsen-Blech, Filmaufzug mit 150 µm Naßfilmstärke, 5 min Ablüften bei 23 °C/50% rel. Luftfeuchte, danach 15 min 60 °C, anschließend 10 d Trocknung bei 23 °C/50% rel. Luftfeuchte; angegeben ist die Tiefung des Bleches, bei der erstmals Rißbildung in der getrockneten Beschichtung festgestellt werden.

### f) Abriebbeständigkeit:

Ermittlung des Abriebs mit dem Taber-Abraser, Prüfrolle CS 17, Gesamtbelastung 1 kg, nach 1000 Umdrehungen, Prüfuntergrund Stahlblech, Beschichtungsaufbau: Filmaufzug von 300 µm Naßfilmstärke, danach Ablüften/Trocknung wie bei e).

### g) Chemikalienbeständigkeit:

Prüfung der Chemikalienbeständigkeit gem DIN 68 861, Teil 1A, Prüfuntergrund Echtholz-(Eiche) furnierte Spanplatte, Beschichtungsaufbau: Filmaufzug von 100 µm Naßfilmstärke, danach 5 min Ablüften bei 23 °C/50% rel. Luftfeuchte, dann Trocknung 15 min 60 °C, nach Abkühlen Zwischenschliff mit Sandpapier Körnung 380, danach erneuter Aufzug mit 150 µm Naßfilmstärke und Ablüften/Trocknung wie unter e) beschrieben. Bewertung gem. DIN.

### h) nutzbare Verarbeitungszeit:

Hierzu wurden nach Mischen der beiden Komponenten in regelmäßigen Abständen Filme auf Glas bzw. Schwarz/Weiß-Kontrastkarten aufgezogen und Chemikalienbeständigkeiten (Glas) bzw. Glanz/Trübung (Kontrastkarte) geprüft. Als Verarbeitungszeit angegeben wird die Zeit nach Mischen der Komponenten, bei der eine Verschlechterung der Chemikalienbeständigkeiten oder eine Glanzreduktion beobachtet wird. Die Klarlackansätze waren bei diesen Zeiten noch nicht geliert.

**Tabelle 11:**

| **Lacktechnische Prüfung der wäßrigen 2K-Klarlacke (Holzlackierung)** | | | |
|---|---|---|---|
| **Prüfung** | **geprüfte Eigenschaft, Einheit** | **Lack 9 (auf Basis Copolymer B)** | **Lack 10 (auf Basis Copolymer 6, Vergleich)** |
| a) | Filmtrübung | 0 | 0 |
| b) | Verlauf | 0 | 0 |
| c) | Staubtrocknung [min] | 10 | 20 |
| d) | Pendelhärte [s] | | |
| | nach 1 h | 12 | 10 |
| | nach 2 h | 19 | 17 |
| | nach 4 h | 31 | 26 |
| | nach 8 h | 70 | 53 |
| | nach 1 d | 106 | 84 |
| | nach 2 d | 136 | 112 |
| | nach 6 d | 154 | 139 |
| | nach 8 d | 157 | 144 |
| | nach 12 d | 168 | 153 |
| e) | Erichsentiefung [mm] | 9,1 | 8,8 |
| f) | Abrieb [mg] | 26,8 | 27,7 |
| g) | Chemikalienbeständigkeiten | | |
| | (Auswahl) | | |
| | 16 h Essigsäure | 0 | 0 |
| | 16 h Zitronensäure | 0 | 0 |
| | 16 h Natriumcarbonat | 0 | 0 |
| | 16 h Ammoniakwasser | 1 | 1 |
| | 16 h Ethanol | 0 | 0 |
| | 16 h Rotwein | 0 | 0 |
| | 16 h Pulverkaffee | 0 | 0 |
| | 16 h Wasser | 0 | 0 |
| | 16 h Aceton | 0 | 0 |
| | 16 h Ethyl-/Butylacetat | 0 | 0 |
| | 16 h Senf | 0 | 0 |
| | 16 h Lippenstift | 0 | 0 |
| | 16 h Kugelschreibertinte | 0 | 0 |
| | 16 h Stempelfarbe | 0 | 0 |
| | 16 h Reinigungslösung | 0 | 0 |
| | 16 h Dibutylphthalat | 0 | 0 |
| h) | Verarbeitungszeit [h] | 4 | 4 |

### Fazit:

Die erfindungsgemäßen Beschichtungsmittel weisen in praxisgerecht formulierten 2K-Klarlacken unkatalysiert sehr hohe Filmhärten, eine schnelle Trocknung und sehr gute Chemikalienbeständigkeiten auf.

### 6.) Prüfung der Pulverklarlacke

| | Vergleich | Lack 11 |
|---|---|---|
| Gelzeit (140 °C) | 191 s | 183 s |
| Fließstrecke bei 140 °C (DIN 16916^{a)}) | 167 mm | 156 mm |

| | | |
|---|---|---|
| ^{a)} Einwaage: 0,2 g; Untergrund: entfettetes Stahlblech; 1 min. waagrecht, dann 60° Neigung | | |

### Fazit:

Der erfindungsgemäße Pulverklarlack 11 weist im Hochsommer eine höhere Blockbeständigkeit als der Vergleichslack auf. Der Verlauf nach dem Einbrennen ist bei beiden Lacken als sehr gut einzustufen.

## Patentansprüche

1. Copolymere von olefinisch ungesättigten Monomeren, dadurch gekennzeichnet, daß eines der Monomeren eine Isomerenmischung von Estern des Isobornylalkohols mit einer α,β-olefinisch ungesättigten Säure ist, wobei der Gehalt an Isoborneol in der Isomerenmischung maximal 92 %, an Isofenchylalkohol mindestens 3,5 % und an Pseudobornylalkohol mindestens 1 % beträgt.

2. Copolymere gemäß Anspruch 1, erhalten durch Umsetzung in Gegenwart von Polymerisationsinitiatoren von 1A) Glycidylestern oder -äthern und 1B) mindestens zwei olefinisch ungesättigten copolymerisierbaren Monomeren, von denen mindestens eines 1B1) mindestens eine Carboxylgruppe trägt und mindestens eines 1B2) eine Isomerenmischung von Estern des Isobornylalkohols ist.

3. Copolymere gemäß Anspruch 2, dadurch gekennzeichnet, daß die Komponente 1A) aus Glycidylestern aliphatischer gesättigter Monocarbonsäuren mit einem tertiären oder quaternären α-Kohlenstoffatom besteht.

4. Copolymere gemäß Anspruch 3, dadurch gekennzeichnet, daß die Komponente 1A) ausgewählt ist aus den Glycidylestern von α-Alkylalkanmonocarbonsäuren und den α,α-Dialkylalkanmonocarbonsäuren mit 4 bis 30 Kohlenstoff-atomen im Säurerest.

5. Copolymere gemäß Anspruch 1, erhalten durch Umsetzung in Gegenwart von Polymerisationsinitiatoren von 2B) mindestens drei olefinisch ungesättigten copolymerisierbaren Monomeren, von denen mindestens eines eine vinylaromatische Verbindung ist, mindestens eines entweder eine Glycidylestergruppe trägt oder diese im Verlauf der Reaktion gebildet wird, und mindestens eines eine Isomerenmischung von Estern des Isobornylalkohols mit einer α,β-ungesättigten Säure ist, und gegebenenfalls 2A) mindestens einem Diester einer α,β-olefinisch ungesättigten Dicarbonsäure mit 1 bis 20 Kohlenstoffatomen in der Alkoholkomponente des Esters.

6. Copolymere gemäß Anspruch 2, dadurch gekennzeichnet, daß die Komponente 1B) eine oder mehrere Verbindungen 1B3) enthält, ausgewählt aus der Gruppe der Hydroxyalkylester von α,β-olefinisch ungesättigten Carbonsäuren.

7. Copolymere gemäß Anspruch 2, dadurch gekennzeichnet, daß die Komponente 1B) eine oder mehrere Verbindungen 1B4) enthält, ausgewählt aus der Gruppe der Ester von α,β-olefinisch ungesättigten Carbonsäuren mit einwertigen aliphatischen Alkoholen mit 1 bis 20 Kohlenstoffatomen.

8. Copolymere gemäß Anspruch 2, dadurch gekennzeichnet, daß die Komponente 1B) eine oder mehrere Verbindungen 1B5) enthält, ausgewählt aus der Gruppe der olefinisch ungesättigten Verbindungen, die nicht unter 1B1, 1B2, 1B3 und 1B4 fallen.

9. Copolymere gemäß Anspruch 2, dadurch gekennzeichnet, daß die Komponente 1A) in einem Massenanteil von 3 bis 50 % und die Komponente 1B) in einem Massenanteil von 97 bis 50 % vorliegt, bezogen auf die Masse des Copolymeren.

10. Verfahren zur Herstellung von wasserverdünnbaren Polyacrylatdispersionen, dadurch gekennzeichnet, daß die Copolymeren gemäß Anspruch 2 in einem wasserverdünnbaren organischen Lösungsmittel angelöst werden, dann partiell oder vollständig neutralisiert werden und danach durch Zugabe von Wasser zur Lösung verdünnt oder durch Einrühren der Lösung in Wasser invers verdünnt werden.

11. Copolymere gemäß Anspruch 5, dadurch gekennzeichnet, daß die Verbindungen 2A) ausgewählt sind aus den Dialkylestern von α,β-olefinisch ungesättigten Carbonsäuren mit 1 bis 10 Kohlenstoffatomen einzeln oder im Gemisch.

12. Copolymere gemäß Anspruch 5, dadurch gekennzeichnet, daß die Komponente 2B) eine oder mehrere Verbindungen 2B1) enthält, ausgewählt aus vinylaromatischen Verbindungen.

13. Copolymere gemäß Anspruch 5, dadurch gekennzeichnet, daß die Komponente 2B) eine oder mehrere Verbindungen 2B2) enthält, ausgewählt aus Isomerenmischungen von Estern des Isobornylalkohols mit α,β-olefinisch ungesättigten Carbonsäuren.

14. Copolymere gemäß Anspruch 5, dadurch gekennzeichnet, daß die Komponente 2B) eine oder mehrere Verbindungen 2B3) enthält, ausgewählt aus Estern einer α,β-olefinisch ungesättigten Carbonsäure mit einer Alkoholkomponente, die eine Glycidylgruppe enthält.

15. Copolymere gemäß Anspruch 5, dadurch gekennzeichnet, daß die Komponente 2B) eine oder mehrere Verbindungen 2B4) enthält, ausgewählt aus α,β-olefinisch ungesättigten Carbonsäuren und sauren Estern von α,β-olefinisch ungesättigten Polycarbonsäuren, wobei vor, während oder nach der Polymerisation ein Ester einer aliphatischen gesättigten Monocarbonsäure mit einem tertiären oder quaternären α-Kohlenstoffatom und einer Epoxygruppen-haltigen Alkoholkomponente zugegeben wird.

16. Copolymere gemäß Anspruch 5, dadurch gekennzeichnet, daß die Komponente 2B) eine oder mehrere Verbindungen 2B4) enthält, ausgewählt aus den Verbindungen gemäß 1B1, 1B3, 1B4 und 1B5.

17. Copolymere gemäß Anspruch 5, dadurch gekennzeichnet, daß die Komponente 2A) in einem Massenanteil von 0 bis 60 % und die Komponente 2B) in einem Massenanteil von 100 bis 40 % vorliegt, bezogen auf die Masse des Copolymeren.

18. Verfahren zur Herstellung der Copolymeren gemäß Anspruch 1, dadurch gekennzeichnet, daß als Polymerisationsinitiatoren radikalbildende Verbindungen ausgewählt aus der Gruppe der aliphatischen Azoverbindungen, der Diacylperoxide, der Alkylperester, der Alkylhydroperoxide, der Dialkylperoxide und der Peroxydicarbonate jeweils einzeln oder in Mischung eingesetzt werden.

19. Verfahren zur Herstellung der Copolymeren gemäß Anspruch 1, dadurch gekennzeichnet, daß die Polymerisation als Substanzpolymerisation durchgeführt wird.

20. Verwendung der Copolymerisate gemäß Anspruch 1 in Beschichtungsmitteln.

21. Verwendung der Copolymerisate gemäß Anspruch 1 in festkörperreichen Beschichtungsmitteln.

22. Verwendung der Copolymerisate gemäß Anspruch 1 in wäßrigen Beschichtungsmitteln.

23. Verwendung der Copolymerisate gemäß Anspruch 1 in pulverförmigen Beschichtungsmitteln.

24. Verwendung der Copolymerisate gemäß Anspruch 1 in festkörperreichen Einkomponenten-Klarlacken oder -pigmentierten Lacken.

25. Verwendung der Copolymerisate gemäß Anspruch 1 in festkörperreichen Zweikomponenten-Klarlacken oder -pigmentierten Lacken.

26. Verwendung der Copolymerisate gemäß Anspruch 1 in wäßrigen Einkomponenten-Klarlacken oder -pigmentierten Lacken.

27. Verwendung der Copolymerisate gemäß Anspruch 1 in wäßrigen Zweikomponenten-Klarlacken oder -pigmentierten Lacken.

28. Verwendung der Copolymerisate gemäß Anspruch 1 in pulverförmigen Klarlacken und pulverförmigen pigmentierten Lacken.

29. Verwendung der Copolymerisate gemäß Anspruch 1 in Kombination mit Härtern ausgewählt aus Säuren, Säureanhydriden, Polyanhydriden und polyolmodifizierten Polyanhydriden in pulverförmigen Lacken.

30. Verwendung der Copolymerisate gemäß Anspruch 1 in Kombination mit Härtern ausgewählt aus Dodecandisäure und Dodecandisäureanhydrid in pulverförmigen Lacken.

31. Verwendung der Copolymerisate gemäß Anspruch 1 in Füllern.

32. Verwendung der Copolymerisate gemäß Anspruch 1 in Beschichtungsmitteln für Holz, Papier, Karton, Kunststoffe, Textilien, Metall und Baustoffe.

33. Verwendung der Copolymerisate gemäß Anspruch 1 in Beschichtungsmitteln, die zwischen Raumtemperatur und 90 °C bzw. 180 °C getrocknet werden.

34. Verwendung der Copolymerisate gemäß Anspruch 1 in Klebstoffen.

35. Verwendung der Copolymerisate gemäß Anspruch 1 in Dichtungsmassen.

## Claims

1. A copolymer of olefinically unsaturated monomers, wherein one of the monomers is an isomer mixture of esters of isobornyl alcohol with an α,β-olefinically unsaturated acid, the content of isoborneol in the isomer mixture being not more than 92 %, that of isofenchyl alcohol being at least 3.5 % and that of pseudobornyl alcohol being at least 1 %.

2. A copolymer as claimed in claim 1, obtained by reaction in the presence of polymerization initiators of 1A) glycidyl esters or glycidyl ethers and 1B) at least two olefinically unsaturated copolymerizable monomers, of which at least one 1B1) carries at least one carboxyl group and at least one 1B2) is an isomer mixture of esters of isobornyl alcohol.

3. A copolymer as claimed in claim 2, wherein component 1A) comprises glycidyl esters of aliphatic saturated monocarboxylic acids having a tertiary or quaternary α-carbon atom.

4. A copolymer as claimed in claim 3, wherein component 1A) is selected from the glycidyl esters of α-alkylalkanemonocarboxylic acids and α,α-dialkylalkanemonocarboxylic acids having 4 to 30 carbon atoms in the acid radical.

5. A copolymer as claimed in claim 1, obtained by reaction in the presence of polymerization initiators of 2B) at least three olefinically unsaturated copolymerizable monomers, of which at least one is an aromatic vinyl compound, at least one either carries a glycidyl ester group or this group is formed in the course of the reaction, and at least one is an isomer mixture of esters of isobornyl alcohol with an α,β-unsaturated acid, and, if desired, 2A) at least one diester of an α,β-olefinically unsaturated dicarboxylic acid having 1 to 20 carbon atoms in the alcohol component of the ester.

6. A copolymer as claimed in claim 2, wherein component 1B) comprises one or more compounds 1B3) selected from the group of the hydroxyalkyl esters of α,β-olefinically unsaturated carboxylic acids.

7. A copolymer as claimed in claim 2, wherein component 1B) comprises one or more compounds 1B4) selected from the group of the esters of α,β-olefinically unsaturated carboxylic acids with monohydric aliphatic alcohols of 1 to 20 carbon atoms.

8. A copolymer as claimed in claim 2, wherein component 1B) comprises one or more compounds 1B5) selected from the group of olefinically unsaturated compounds which do not come under 1B1, 1B2, 1B3 and 1B4.

9. A copolymer as claimed in claim 2, wherein component 1A) is present in a proportion by mass of from 3 to 50 % and component 1B) is present in a proportion by mass of from 97 to 50 %, based on the mass of the copolymer.

10. A process for the preparation of a water-dilutable polyacrylate dispersion, which comprises partially dissolving a copolymer as claimed in claim 2 in a water-dilutable organic solvent, then carrying out partial or complete neutralization, and subsequently diluting the solution by adding water or subjecting it to dilution in inverse form by stirring it into water.

11. A copolymer as claimed in claim 5, wherein the compounds 2A) are selected from the dialkyl esters of α,β-olefinically unsaturated carboxylic acids of 1 to 10 carbon atoms, individually or in a mixture.

12. A copolymer as claimed in claim 5, wherein component 2B) comprises one or more compounds 2B1) selected from aromatic vinyl compounds.

13. A copolymer as claimed in claim 5, wherein component 2B) comprises one or more compounds 2B2) selected from isomer mixtures of esters of isobornyl alcohol with α,β-olefinically unsaturated carboxylic acids.

14. A copolymer as claimed in claim 5, wherein component 2B) comprises one or more compounds 2B3) selected from esters of an α,β-olefinically unsaturated carboxylic acid with an alcohol component which contains a glycidyl group.

15. A copolymer as claimed in claim 5, wherein component 2B) comprises one or more compounds 2B4) selected from α,β-olefinically unsaturated carboxylic acids and acidic esters of α,β-olefinically unsaturated polycarboxylic acids, with an ester of an aliphatic saturated monocarboxylic acid having a tertiary or quaternary α carbon atom and an epoxy-containing alcohol component being added before, during or after polymerization.

16. A copolymer as claimed in claim 5, wherein component 2B) comprises one or more compounds 2B4) selected from the compounds according to 1B1, 1B3, 1B4 and 1B5.

17. A copolymer as claimed in claim 5, wherein component 2A) is present in a proportion by mass of from 0 to 60 % and component 2B) is present in a proportion by mass of from 100 to 40 %, based on the mass of the copolymer.

18. A process for the preparation of a copolymer as claimed in claim 1, which comprises employing, as polymerization initiators, radical-forming compounds selected from the group of aliphatic azo compounds, diacyl peroxides, alkyl per-esters, alkyl hydroperoxides, dialkyl peroxides and peroxydicarbonates, in each case individually or in a mixture.

19. A process for the preparation of a copolymer as claimed in claim 1, wherein the polymerization is carried out as a bulk polymerization.

20. The use of a copolymer as claimed in claim 1 in coating compositions.

21. The use of a copolymer as claimed in claim 1 in high-solids coating compositions.

22. The use of a copolymer as claimed in claim 1 in aqueous coating compositions.

23. The use of a copolymer as claimed in claim 1 in powder coating compositions.

24. The use of a copolymer as claimed in claim 1 in high-solids one-component clearcoats or pigmented coating materials.

25. The use of a copolymer as claimed in claim 1 in high-solids two-component clearcoats or pigmented coating materials.

26. The use of a copolymer as claimed in claim 1 in aqueous one-component clearcoats or pigmented coating materials.

27. The use of a copolymer as claimed in claim 1 in aqueous two-component clearcoats or pigmented coating materials.

28. The use of a copolymer as claimed in claim 1 in powder clearcoats and pigmented powder coating materials.

29. The use of a copolymer as claimed in claim 1 in combination with curing agents selected from acids, acid anhydrides, polyanhydrides and polyol-modified polyanhydrides in powder coating materials.

30. The use of a copolymer as claimed in claim 1 in combination with curing agents selected from dodecanedioic acid and dodecanedioic anhydride in powder coating materials.

31. The use of a copolymer as claimed in claim 1 in fillers.

32. The use of a copolymer as claimed in claim 1 in coating compositions for wood, paper, cardboard, plastics, textiles, metal and construction materials.

33. The use of a copolymer as claimed in claim 1 in coating compositions which are dried at between room temperature and 90°C or 180°C.

34. The use of a copolymer as claimed in claim 1 in adhesives.

35. The use of a copolymer as claimed in claim 1 in sealing compositions.

## Revendications

1. Copolymères de monomères à insaturation oléfinique, caractérisés en ce que l'un des monomères est un mélange d'isomères d'esters de l'alcool isobornylique avec un acide à insaturation oléfinique en α,β, la teneur en isobornéol dans le mélange d'isomères étant de 92 % au maximum, en alcool isofenchylique d'au moins 3,5 % et en alcool pseudobornylique d'au moins 1 %.

2. Copolymères selon la revendication 1, obtenus par transformation en présence d'amorceurs de polymérisation 1A) d'esters ou éthers glycidyliques et 1B) d'au moins deux monomères copolymérisables à insaturation oléfinique, dont au moins un 1B1) porte au moins un groupe carboxyle et au moins un 1B2) est un mélange d'isomères d'esters de l'alcool isbornylique.

3. Copolymères selon la revendication 2, caractérisés en ce que le composant 1A) est constitué d'esters glycidyliques d'acides monocarboxyliques saturés aliphatiques avec un atome de carbone α tertiaire ou quaternaire.

4. Copolymères selon la revendication 3, caractérisés en ce que le composant 1A) est pris parmi les esters glycidyliques d'acides α-alkylalcanemonocarboxyliques et des acides α,α-dialkylalcanemonocarboxyliques avec 4 à 30 atomes de carbone dans le reste acide.

5. Copolymères selon la revendication 1, obtenus par transformation en présence d'amorceurs de polymérisation de 2B) au moins trois monomères copolymérisables à insaturation oléfinique, dont au moins un est un composé vinylaromatique, au moins un soit porte un groupe ester glycidylique, soit ce groupe est formé au cours de la réaction, et au moins un est un mélange d'isomères d'esters de l'alcool isobornylique avec un acide insaturé en α,β, et éventuellement 2A) au moins d'un diester d'un acide dicarboxylique insaturé en α,β avec 1 à 20 atomes de carbone dans le composant alcool de l'ester.

6. Copolymères selon la revendication 2, caractérisés en ce que le composant 1B) contient un ou plusieurs composés 1B3), pris parmi le groupe des esters d'hydroxyalkyle d'acides carboxyliques à insaturation oléfinique en α,β.

7. Copolymères selon la revendication 2, caractérisés en ce que le composant 1B) contient un ou plusieurs composés 1B4), pris dans le groupe des esters d'acides carboxyliques à insaturation oléfinique en α,β avec des alcools aliphatiques monofonctionnels avec 1 à 20 atomes de carbone.

8. Copolymères selon la revendication 2, caractérisés en ce que le composant 1B) contient un ou plusieurs composés 1B5), pris dans le groupe des composés à insaturation oléfinique qui n'entrent pas sous les points 1B1, 1B2, 1B3 et 1B4.

9. Copolymères selon la revendication 2, caractérisés en ce que le composant 1A) est présent dans un taux en masse de 3 à 50 % et le composant 1B) dans un taux en masse de 97 à 50 %, par rapport à la masse du copolymère.

10. Procédé de préparation de dispersions de polyacrylates diluables à l'eau, caractérisé en ce que les copolymères selon la revendication 2 sont dissous dans un solvant organique diluable à l'eau, puis neutralisés partiellement ou complètement, et ensuite dilués par ajout d'eau à la solution ou dissous inversement en délayant la solution dans l'eau.

11. Copolymères selon la revendication 5, caractérisés en ce que les composés 2A) sont pris parmi les esters de dialkyle d'acides carboxyliques à insaturation oléfinique en α,β avec 1 à 10 atomes de carbone, seuls ou en mélange.

12. Copolymères selon la revendication 5, caractérisés en ce que le composant 2B) contient un ou plusieurs composés 2B1), pris parmi les composés vinylaromatiques.

13. Copolymères selon la revendication 5, caractérisés en ce que le composant 2B) contient un ou plusieurs composés 2B2), pris parmi les mélanges d'isomères d'esters de l'alcool isobornylique avec des acides carboxyliques à insaturation oléfinique en α,β.

14. Copolymères selon la revendication 5, caractérisés en ce que le composant 2B) contient un ou plusieurs composés 2B3) pris parmi les esters d'un acide carboxylique à insaturation oléfinique en α,β avec un composant alcool qui contient un groupe glycidylique.

15. Copolymères selon la revendication 5, caractérisés en ce que le composant 2B) contient un ou plusieurs composés 2B4), pris dans le groupe des acides carboxyliques à insaturation oléfinique en *α,β* et des esters acides d'acides polycarboxyliques à insaturation oléfinique en α,β, en ajoutant avant, au cours ou après la polymérisation un ester d'un acide monocarboxylique aliphatique saturé comportant un atome de carbone α tertiaire ou quaternaire et d'un composant alcool contenant des groupes époxy.

16. Copolymères selon la revendication 5, caractérisés en ce que le composant 2B) contient un ou plusieurs composés 2B4), pris parmi les composés selon 1B1, 1B3, 1B4 et 1B5.

17. Copolymères selon la revendication 5, caractérisés en ce que le composant 2A) est présent dans un taux en masse de 0 à 60 % et le composant 2B) dans un taux en masse de 100 à 40 %, par rapport à la masse du copolymère.

18. Procédé pour la préparation des copolymères selon la revendication 1, caractérisé en ce que les composés formateurs de radicaux en tant qu'amorceurs de polymérisation, pris dans le groupe des composés azoïques aliphatiques, des peroxydes de diacyle, des peresters d'alkyle, des hydroperoxydes d'alkyle, des peroxydes de dialkyle et des peroxydicarbonates, sont utilisés à chaque fois seuls ou en mélange.

19. Procédé de préparation des copolymères selon la revendication 1, caractérisé en ce que l'on met en oeuvre la polymérisation comme une polymérisation sans solvant.

20. Utilisation des copolymères selon la revendication 1 dans des agents de revêtement.

21. Utilisation des copolymères selon la revendication 1 dans des agents de revêtement riches en extrait sec.

22. Utilisation des copolymères selon la revendication 1 dans des agents de revêtement aqueux.

23. Utilisation des copolymères selon la revendication 1 dans des agents de revêtement pulvérulents.

24. Utilisation des copolymères selon la revendication 1 dans des vernis pigmentés ou vernis incolores à 1-composant riches en extrait sec.

25. Utilisation des copolymères selon la revendication 1 dans des vernis pigmentés ou vernis incolores à 2-composants riches en extrait sec.

26. Utilisation des copolymères selon la revendication 1 dans des vernis pigmentés ou vernis incolores à 1-composant aqueux.

27. Utilisation des copolymères selon la revendication 1 dans des vernis pigmentés ou vernis incolores à 2-composants aqueux.

28. Utilisation des copolymères selon la revendication 1 dans des vernis incolores pulvérulents et des vernis pigmentés pulvérulents.

29. Utilisation des copolymères selon la revendication 1, en combinaison avec des durcisseurs pris parmi des acides, anhydrides d'acides, polyanhydrides et polyanhydrides modifiés par des polyols, dans des vernis pulvérulents.

30. Utilisation des copolymères selon la revendication 1, en combinaosn avec des durcisseurs pris parmi le diacide dodécanoïque et l'anhydride de diacide dodécanoïque, dans des vernis pulvérulents.

31. Utilisation des copolymères selon la revendication 1 dans des charges.

32. Utilisation des copolymères selon la revendication 1, dans des revêtements pour le bois, le papier, le carton, les matières plastiques, les textiles, les métaux et les matériaux de construction.

33. Utilisation des copolymères selon la revendication 1, dans des agents de revêtement que l'on sèche dans un intervalle de température compris entre la température ambiante et 90 °C, respectivement 180 °C.

34. Utilisation des copolymères selon la revendication 1 dans des adhésifs.

35. Utilisation des copolymères selon la revendication 1 dans des joints d'étanchéité.
